# EUROPÄISCHE PATENTSCHRIFT

(11) **EP 3 950 244 B1**
(45) Veröffentlichungstag und Bekanntmachung des Hinweises auf die Patenterteilung: **01.10.2025**
(21) Anmeldenummer: 21189661.8
(22) Anmeldetag: 04.08.2021
(51) Int. Cl.: B26D 1/547, B26D 7/06, B26D 7/30, B65B 37/18, B65G 15/50, B65G 21/10

(54) **VORRICHTUNGEN UND VERFAHREN ZUM AUSGLEICHEN VON GEWICHTSUNTERSCHIEDEN VON LEBENSMITTELPRODUKTRIEGELN**
METHOD AND DEVICES FOR COMPENSATING FOR DIFFERENCES BETWEEN THE WEIGHTS OF FOOD PRODUCT BARS
DISPOSITIFS ET PROCÉDÉ DE COMPENSATION DES DIFFÉRENCES DU POIDS DES BÂTONS DE PRODUITS ALIMENTAIRES

(30) Priorität: 06.08.2020 DE 102020120816; 22.02.2021 DE 102021104148
(43) Veröffentlichungstag der Anmeldung: 09.02.2022
(73) Patentinhaber: Weber Food Technology SE & Co. KG, 35236 Breidenbach (DE)
(72) Erfinder: RITZEN, Noel, 6361 JL Beekdalen (NL); WETTER, Denise, 35719 Angelburg (DE); STÖWER, Andreas, 57392 Schmallenberg (DE); STREMEL, Jörg, 57334 Bad Laasphe (DE); PRIEBISCH, Jan, 59939 Olsberg-Bruchhausen (DE)
(74) Vertreter: Manitz Finsterwald Patent- und Rechtsanwaltspartnerschaft mbB

(56) Entgegenhaltungen:
- EP-A1- 2 420 364
- EP-A1- 3 466 624
- DE-A1- 102012 210 719

## Beschreibung

Die Erfindung betrifft allgemein Vorrichtungen, die es unterstützen, einen Gewichtsunterschied von zwei auf parallelen Spuren aufzuschneidenden Mengen von Lebensmittelproduktriegeln auszugleichen und so dafür zu sorgen, dass auf jeder Spur eine im Wesentlichen gleiche Menge Lebensmittelprodukt aufgeschnitten werden kann.
EP3466624 A1 offenbart ein Verfahren mit den Schritten des Oberbegriffes des Anspruchs 1.

DE 10 2012 210 719 A1 offenbart eine Vorrichtung zum mehrspurigen Fördern von Produkten mit den Merkmalen des Oberbegriffs des Anspruchs 6.

Bei industriellem Aufschneiden von Lebensmittelprodukten, wie z.B. Wurst, Bacon oder Käse, mittels sogenannten Hochleistungsslicern ist es üblich, dass Produktriegel in parallel zueinander verlaufenden Spuren aufgeschnitten werden. Wenn parallel nebeneinander aufzuschneidende Produktriegel ein sich voneinander unterscheidendes Gewicht aufweisen, kommt es vor, dass auf einer Spur noch Lebensmittelprodukt aufgeschnitten wird, während auf einer anderen Spur kein noch aufzuschneidendes Lebensmittelprodukt mehr vorhanden ist. Dies kann zu unvollständigen Portionen, d.h. beispielsweise zu Portionen mit zu niedrigem Gewicht, führen, welche nicht verkäuflich sind und somit Ausschuss bilden. Zusätzlich können sich sogenannte Portionslücken bilden, wenn die kumulierten Gewichte der auf den Spuren verarbeiteten Lebensmittel untereinander über die Zeit immer weiter voneinander abweichen. Diese Portionslücken müssen dann im Verlauf der Sortier- und Förderstrecke aufwendig durch Umverteilen aufgefüllt werden.

Es ist eine Aufgabe der vorliegenden Erfindung, ein Verfahren bereitzustellen, mittels dem es ermöglicht wird, unvollständige Portionen oder Portionslücken zu reduzieren oder zu eliminieren. Es ist zudem eine Aufgabe der vorliegenden Erfindung, eine Vorrichtung vorzusehen, die dazu beiträgt, unvollständige Portionen oder Portionslücken zu reduzieren oder bestenfalls gänzlich zu eliminieren.

Die Aufgabe wird zum einen gelöst durch ein Verfahren mit den Merkmalen des Anspruchs 1. Die Aufgabe wird auch durch eine erfindungsgemäße Vorrichtung gemäss Anspruch 6 gelöst. Die Vorrichtung dient zum Verändern eines Abstandes zwischen zwei Lebensmittelproduktriegeln und umfasst eine Auflagefläche, welche sich in einer im Wesentlichen horizontalen Ebene entlang einer Förderrichtung erstreckt, wobei die zumindest eine Auflagefläche zumindest zwei im Wesentlichen parallel zueinander angeordnete Ablageflächenbereiche bereitstellt, und wobei ein Abstand zwischen den Ablageflächenbereichen durch eine, ausschließlich in einer quer, insbesondere senkrecht, zu der Förderrichtung ausgerichteten Verstellrichtung erfolgende, Relativbewegung der Ablageflächenbereiche veränderbar ist.

Ein Grundgedanke dieser Vorrichtung liegt darin, einen Abstand von nebeneinander liegenden Lebensmittelproduktriegeln während eines Betriebs der Vorrichtung so zu vergrößern, dass ein automatisiertes Aufnehmen der Lebensmittelproduktriegel mittels eines Roboterarms vereinfacht wird. Hierdurch können die Lebensmittelproduktriegel einfacher verschiedenen Spuren zugeführt werden und so ein Gewichtsausgleich zwischen den Spuren durchgeführt werden. Ein weiterer Vorteil dieser Vorrichtung besteht darin, dass die Ablageflächenbereiche so beabstandet zueinander angeordnet werden können, dass ein Ablegen eines Lebensmittelproduktriegels auf einer der Ablageflächenbereiche nicht von einem anderen bereits auf einem anderen Ablageflächenbereich liegenden Lebensmittelproduktriegel gestört wird.

Dadurch, dass die Ablageflächenbereiche ausschließlich in einer quer, insbesondere senkrecht, zu der Förderrichtung ausgerichteten Verstellrichtung relativ zueinander bewegt werden, kann die Vorrichtung zudem besonders kompakt gestaltet werden.

Vorteilhafte Ausbildungen der Erfindung sind den Unteransprüchen, der Beschreibung und den Zeichnungen zu entnehmen.

Gemäß einer Ausführungsform sind die Ablageflächenbereiche in Einbaulage in seitlicher Richtung relativ zueinander verstellbar. Alternativ oder zusätzlich können die Ablageflächenbereiche in Einbaulage in vertikaler Richtung relativ zueinander verstellbar sein. Speziell können die Ablageflächenbereiche ausschließlich in seitlicher Richtung relativ zueinander verstellbar sein und/oder ausschließlich in vertikaler Richtung relativ zueinander verstellbar sein.

Gemäß einer konstruktiv einfachen Variante kann einer der Ablageflächenbereiche verstellbar ausgebildet sein und ein anderen der Ablageflächenbereiche nicht verstellbar ausgebildet sein. Alternativ dazu können mehrere oder alle Ablageflächenbereiche verstellbar ausgebildet sein, um möglichst schnell eine relative Verstellung der Ablageflächenbereiche durchführen zu können.

Damit zumindest drei Lebensmittelproduktriegel gleichzeitig auf der Auflagefläche positioniert werden können, stellt die Auflagefläche vorzugsweise zumindest drei im Wesentlichen parallel zueinander angeordnete Ablageflächenbereiche bereit. So können drei, beispielsweise aus einem Käselaib, erzeugte und auf der Auflagefläche platzierte Lebensmittelproduktriegel jeweils durch die Vorrichtung voneinander beabstandet werden, um diese in einer beliebigen Reihenfolge mittels eines Roboterarms zu greifen und beispielsweise einer Spur eines Hochleistungsslicers zuzuordnen. Die zumindest drei im Wesentlichen parallel zueinander angeordneten Ablageflächenbereiche können jeweils verstellbar sein. Alternativ ist es aber auch denkbar, dass nur ein Teil der zumindest drei Ablageflächenbereiche verstellbar ausgebildet ist und ein anderer Teil der zumindest drei Ablageflächenbereiche nicht verstellbar ausgebildet ist.

Gemäß einer Ausführungsform ist der Abstand in Verstellrichtung zwischen den Ablageflächenbereichen durch eine ausschließlich in Verstellrichtung erfolgende Relativbewegung der Ablageflächenbereiche veränderbar. Vorzugsweise erstreckt sich die Auflagefläche in Förderrichtung und in Verstellrichtung.

Gemäß einer Ausführungsform sind die Ablageflächenbereiche durch eine rein translatorische Relativbewegung zueinander verstellbar. Vorzugsweise sind die Ablageflächenbereiche durch eine ausschließlich lineare, d.h. in genau eine Richtung und Gegenrichtung verlaufende, Relativbewegung zueinander verstellbar. Alternativ dazu können die Ablageflächenbereiche beispielsweise durch eine Schwenkbewegung der Ablageflächenbereiche voneinander beabstandet werden. Dabei ist es vorteilhaft, wenn die Ablageflächenbereiche stets im Wesentlichen horizontal ausgerichtet bleiben, um ein Herunterfallen der Lebensmittelproduktriegel zu vermeiden.

Gemäß einer Ausführungsform ist zumindest ein Stellmotor vorgesehen, um die Ablageflächenbereiche in der Verstellrichtung relativ zueinander zu verstellen. Der Stellmotor kann zumindest einen Stellzylinder umfassen, der dazu ausgebildet ist, einen der Ablageflächenbereiche in einer quer zu der Förderrichtung ausgerichteten Verstellrichtung zu verstellen. Alternativ oder zusätzlich kann zumindest einer der Stellmotoren als Elektromotor ausgebildet sein. Zur Verstellung zumindest eines der Ablageflächenbereiche kann eine Spindel vorgesehen sein, welche vorzugsweise von dem Elektromotor antreibbar ist. Der Ablageflächenbereich kann mit einer Spindelmutter gekoppelt sein, welche auf der Spindel angeordnet und durch eine Drehbewegung der Spindel entlang der Spindel verfahrbar ist. Der zumindest eine Stellmotor kann vollautomatisch gesteuert sein. Hierzu kann der zumindest eine Stellmotor mit einer Steuerungseinheit der Vorrichtung gekoppelt sein.

Gemäß einer Ausführungsform ist jeder der verstellbaren Ablageflächenbereiche mit einem separaten Stellmotor gekoppelt, um die Ablageflächenbereiche unabhängig voneinander verstellen zu können. Alternativ dazu kann ein einziger Stellmotor mit mehreren Ablageflächenbereichen gekoppelt sein, um die mehreren Ablageflächenbereiche zu verstellen. Beispielsweise kann der Stellmotor mit einer Spindel antriebswirksam verbunden sein, welche mit mehreren Spindelmuttern in Eingriff steht. Die Spindel kann in einem ersten Bereich eine erste Steigung und in einem zweiten Bereich eine zweite, von der ersten Steigung abweichende, Steigung aufweisen. Eine erste Spindelmutter, welche mit einem ersten Ablageflächenbereich gekoppelt ist, kann in dem ersten Bereich auf der Spindel angeordnet sein. Zudem kann eine zweite Spindelmutter, welche mit einem zweiten Ablageflächenbereich gekoppelt ist, in dem zweiten Bereich der Spindel angeordnet sein. Wird nun die Spindel durch den Stellmotor angetrieben, so wird der erste Ablageflächenbereich einen ersten Weg verstellt und der zweite Ablageflächenbereich einen zweiten, sich von dem ersten Weg unterscheidenden, Weg verstellt. So kann mittels eines Stellmotors ein Abstand zwischen einer Vielzahl von Ablageflächenbereichen erzeugt werden. Vorzugsweise weist die Spindel bzw. Verstellwelle in einem ersten Bereich ein Gewinde mit einer positiven Steigung und in einem zweiten Bereich ein Gewinde mit einer negativen Steigung auf. Hierdurch können zwei Spindelmuttern, welche mit unterschiedlichen Ablageflächenbereichen gekoppelt sind, durch eine Drehbewegung der Verstellwelle auseinandergefahren oder zusammengefahren werden. Alternativ oder zusätzlich kann die Spindel bzw. Verstellwelle in einem ersten Bereich ein Gewinde mit einer ersten, bspw. positiven, Steigung und in einem zweiten Bereich ein Gewinde mit einer gleichartigen zweiten, d.h. bspw. positiven, Steigung aufweisen, welches jedoch mit einer grö-βeren oder kleineren Gewindesteigung ausgebildet ist. Auch hierdurch ist es möglich, durch eine Drehbewegung der Verstellwelle zwei Spindelmuttern, welche mit unterschiedlichen Ablageflächenbereichen gekoppelt sind, auseinander oder zusammen zu fahren.

Gemäß einer Ausführungsform ist die Auflagefläche durch zumindest ein Förderelement, insbesondere ein Endlosförderelement, gebildet. Vorzugsweise werden die Ablageflächenbereiche jeweils durch separate Förderelemente gebildet. Die separaten Förderelemente sind vorzugsweise derart ausgebildet, dass mittels jedes der Förderelemente zumindest ein Lebensmittelproduktriegel entlang der Förderrichtung transportierbar ist. Beispielsweise kann das Förderelement oder können die Förderelemente als Endlosförderband ausgebildet sein. Es ist vorteilhaft, wenn der Lebensmittelproduktriegel durch das Förderelement oder die Förderelemente selbst auf die Auflagefläche aufgebracht und/oder von dieser abtransportiert werden kann, wie es beispielsweise bei einem umlaufenden Endlosförderband der Fall ist.

Das zumindest eine Förderelement, insbesondere Endlosförderelement, kann mit zumindest einem Antriebsmotor gekoppelt sein, um die Lebensmittelproduktriegel in Förderrichtung anzutreiben. Gemäß einer vorteilhaften Ausführungsform sind der Antriebsmotor und der Stellmotor separat voneinander antreibbar. Hierdurch können beispielsweise zunächst die Lebensmittelproduktriegel mittels des Antriebsmotors auf die Auflagefläche aufgebracht und anschließend die Ablageflächenbereiche mittels des Stellmotors hinsichtlich ihres Abstandes verändert werden.

Wenn die zumindest zwei parallel zueinander angeordneten Ablageflächenbereiche durch separate Elemente, insbesondere Förderelemente, gebildet sind, kann jeder Ablageflächenbereich durch genau ein separates, den Ablageflächenbereich definierendes Element oder durch mehrere den Ablageflächenbereich definierende Elemente gebildet sein. Die den Ablageflächenbereich definierenden Elemente können im Wesentlichen gleichartig ausgebildet sein, sodass ein modularer Aufbau des jeweiligen Ablageflächenbereichs möglich ist. Beispielsweise können die die Ablageflächenbereiche definierenden Elemente als Förderriemen oder Förderbänder ausgebildet sein.

Für jeden von einem Förderelement gebildeten Ablageflächenbereich kann ein separater Antriebsmotor vorgesehen sein. Das zumindest eine den Ablageflächenbereich bildende Förderelement und der jeweilige Antriebsmotor können eine Einheit bilden, welche gemeinsam von einem Stellmotor verstellbar ist. Der Antriebsmotor kann beispielsweise als Trommelmotor ausgebildet sein oder an einem Traggerüst des Förderelements befestigt sein. Alternativ dazu können die die Ablageflächenbereiche bildenden Förderelemente mit einem gemeinsamen Antriebsmotor gekoppelt sein. Beispielsweise kann der Antriebsmotor eine Welle antreiben, welche wiederum jedes der Förderelemente antreibt. Die Förderelemente können hierdurch auf einfache Weise synchron zueinander angetrieben werden. Die Welle ist vorzugsweise als Polygonwelle ausgebildet. Dies hat Kostenvorteile gegenüber anderen Lösungen. Die Förderelemente können, insbesondere gemeinsam mit ihrer Tragstruktur, auf der Welle, insbesondere Polygonwelle, verschiebbar gelagert sein.

Vorzugsweise wird die Vorrichtung zum Verändern eines Abstandes zwischen zwei Lebensmittelproduktriegeln in einer Lebensmittelproduktionslinie eingesetzt. Die Vorrichtung kann somit in einer Fertigungslinie vor einem mehrspurigen Hochleistungsslicer Anwendung finden. Beispielsweise kann die Vorrichtung als Austaktband eines Käseteilers verwendet werden. Alternativ dazu kann die Vorrichtung in einer Fertigungslinie nach einem, insbesondere mehrspurigen, Hochleistungsslicer Anwendung finden. Beispielsweise kann die Vorrichtung dazu verwendet werden, um vollständige oder unvollständige Lebensmittelportionen querzuverteilen. Als Lebensmittelportionen werden dabei Portionen aus zumindest einer Scheibe, vorzugsweise mehreren Scheiben, eines Lebensmittelprodukts angesehen.

Die Aufgabe wird zudem gelöst durch ein System mit einer Vorrichtung zum Verändern eines Abstandes zwischen zwei Lebensmittelproduktriegeln gemäß einer der zuvor oder nachstehend beschriebenen Ausführungsformen und mit einer Transfereinheit, insbesondere einem Roboterarm, um die Lebensmittelproduktriegel einzeln von den Ablageflächenbereichen abzuheben oder um die Lebensmittelproduktriegel einzeln auf den Ablageflächenbereichen abzulegen, insbesondere wenn die Ablageflächenbereiche in einen voneinander beabstandeten Zustand gebracht sind. Das System umfasst eine Waage, die mit einer Steuerungseinheit des Systems gekoppelt ist. Das System ist dazu ausgebildet, abhängig von einem Gewicht des jeweiligen Lebensmittelproduktriegels diesen einer Spur eines Hochleistungsslicers zuzuordnen, um einen Gewichtsunterschied von zwei auf parallelen Spuren aufzuschneidenden Mengen von Lebensmittelproduktriegeln auszugleichen.

Die Transfereinheit weist vorzugsweise zumindest ein Greifsystem zum Greifen der Lebensmittelproduktriegel auf. Das Greifsystem umfasst vorzugsweise zumindest zwei Greifarme, die vorteilhafterweise zwischen einer Offenstellung und einer Greifstellung verstellbar sind. Gemäß einer Ausführungsform ist die Transfereinheit dazu ausgebildet, die auf den Ablageflächenbereichen liegenden Lebensmittelproduktriegel zu greifen und abzuheben. Vorzugsweise ist die Transfereinheit mit einer Steuerungseinheit verbunden, welche die Transfereinheit derart steuert, dass die Transfereinheit die Lebensmittelproduktriegel von den Ablageflächenbereichen abhebt, nachdem die Ablageflächenbereiche in einen voneinander beabstandeten Zustand gebracht wurden.

Gemäß einer Ausführungsform kann das System zwei Vorrichtungen zum Verändern eines Abstandes zwischen zwei Lebensmittelproduktriegeln aufweisen, sodass die Transfereinheit, insbesondere der Roboterarm, die Lebensmittelproduktriegel einzeln von den Ablageflächenbereichen der ersten Vorrichtung abheben kann und dann einzeln, beispielsweise in einer geänderten Anordnung, auf den Ablageflächenbereichen der zweiten Vorrichtung ablegen kann. Die Vorrichtungen können eines oder mehrere der zuvor oder nachstehend beschriebenen Merkmale aufweisen.

Die Vorrichtung kann ferner die Waage umfassen. Die Waage ist vorzugsweise in die zumindest eine Vorrichtung zum Verändern eines Abstandes zwischen den Lebensmittelproduktriegeln integriert, um die auf der Auflagefläche befindlichen Lebensmittelproduktriegel zu wiegen. Vorzugsweise ist jedem Ablageflächenbereich zumindest eine separate Wägezelle zugeordnet, um die Lebensmittelproduktriegel separat voneinander wiegen zu können. Die Waage ist mit der Steuerungseinheit des Systems gekoppelt, sodass das System abhängig vom Gewicht des jeweiligen Lebensmittelproduktriegels diesen einer Spur eines Hochleistungsslicers zuordnen kann.

Die Waage oder die separaten Wägezellen können, abhängig von einer Stellung der Ablageflächenbereiche zueinander, in einen aktiven Zustand oder in einen passiven Zustand bringbar sein, d.h. in einen Zustand, in dem ein entsprechender Lebensmittelproduktriegel gewogen wird und in einen Zustand in dem der entsprechende Lebensmittelproduktriegel nicht gewogen wird. Beispielsweise kann das Wiegen nur in einer Stellung der Vorrichtung möglich sein, in der die Ablageflächenbereiche auf einen minimalen Abstand zueinander gebracht sind. Sobald der Abstand der Ablageflächenbereiche vergrößert wird, kann die zumindest eine Wägezelle mechanisch entlastet oder abgeschaltet werden, sodass das Gewicht des Lebensmittelproduktriegels nicht mehr gewogen werden kann. Alternativ wäre auch denkbar, dass das Wiegen nur in einer Stellung möglich ist, in denen die Ablageflächenbereiche auf einen maximalen Abstand zueinander gebracht sind.

Das System kann beispielsweise Bestandteil eines Käseteilers bzw. einer Käseteilerlinie sein, welcher in der Regel eine Schneideinheit aufweist, um aus einem Käselaib einzelne Lebensmittelproduktriegel zu erzeugen. Das System kann bezüglich der Prozesskette hinter dem Käseteiler angeordnet sein, um die vom Käseteiler erzeugten Lebensmittelproduktriegel abhängig von ihrem Gewicht einzelnen Spuren zuzuordnen. Diese Spuren können wiederum zu einem Hochleistungsslicer führen, um die Lebensmittelproduktriegel in Scheiben aufzuschneiden.

Der Käseteiler kann mit einer Schneideinheit ausgestattet sein, um aus einem Käselaib einzelne Lebensmittelproduktriegel zu erzeugen, wobei die Schneideinheit zumindest ein Schneidwerkzeug aufweist, und wobei Verstellmittel vorgesehen sind, um das zumindest eine Schneidwerkzeug relativ zu einer Längsachse des Käselaibs zu verstellen und/oder wobei Mittel vorgesehen sind, um den Käselaib relativ zu einer Schneidebene des Schneidwerkzeugs zu bewegen.

Ein grundliegender Gedanke des zuvor beschriebenen Käseteilers besteht darin, zumindest eine Schneidebene des Käseteilers relativ zu dem aufzuschneidenden Käselaib verstellen zu können, um beispielsweise absichtlich zumindest zwei unterschiedlich schwere Lebensmittelproduktriegel erzeugen zu können. Hierdurch können Gewichtsunterschiede von zuvor aufgeschnittenen Lebensmittelproduktriegeln ausgeglichen werden. Alternativ dazu kann hierdurch eine unterschiedliche Massenverteilung im Käselaib ausgeglichen werden, und so zwar unterschiedlich große, aber gleich schwere Lebensmittelproduktriegel erzeugt werden.

Gemäß einer Ausführungsform umfassen die Verstellmittel einen Schneidwerkzeug-Verstellantrieb. Hierdurch kann das Schneidwerkzeug, insbesondere vollautomatisch, verstellt werden, um beispielsweise bewusst unterschiedlich schwere Lebensmittelproduktriegel zu erzeugen. Sofern mehrere Schneidwerkzeuge an dem Käseteiler vorgesehen sind, können mehrere separate Verstellmittel oder Schneidwerkzeug-Verstellantriebe vorgesehen sein, sodass jedes Schneidwerkzeug individuell, d.h. unabhängig von den anderen Schneidwerkzeugen, verstellt werden kann.

Alternativ oder zusätzlich können die Mittel zum Bewegen des Käselaibs relativ zu der Schneidebene des Schneidwerkzeugs einen Antrieb umfassen. Hierdurch kann der zu schneidende Käselaib, insbesondere automatisch, relativ zu der Schneidebene des zumindest einen Schneidwerkzeugs bewegt werden. Beispielsweise können die Mittel zum Bewegen des Käselaibs einen Schieber umfassen, um den Käselaib relativ zu der Schneidebene des Schneidwerkzeugs zu verschieben. Das zumindest eine Schneidwerkzeug kann als Schneiddraht oder Klinge ausgebildet sein.

Gemäß einer Ausführungsform ist das zumindest eine Schneidwerkzeug in seiner Einbaulage im Wesentlichen vertikal ausgerichtet. Die Verstellmittel können dann dazu ausgebildet sein, das Schneidwerkzeug rein translatorisch in horizontaler Richtung relativ zu dem Käselaib zu verstellen. Alternativ dazu kann das zumindest eine Schneidwerkzeug in seiner Einbaulage im Wesentlichen horizontal ausgerichtet sein. In diesem Fall können die Verstellmittel dazu ausgebildet sein, das Schneidwerkzeug rein translatorisch in vertikaler Richtung relativ zu dem Käselaib zu verstellen. Als translatorische Bewegung wird hierbei eine Bewegung bezeichnet, bei der sich alle Abschnitte des Gegenstands um den gleichen Betrag in die gleiche Richtung bewegen.

Gemäß einer konstruktiv einfachen Ausgestaltung kann das zumindest eine Schneidwerkzeug in einem Schneidrahmen befestigt sein. In diesem Fall können die Verstellmittel dazu ausgebildet sein, den Schneidrahmen zu verstellen. Der Schneidrahmen kann mittels der Verstellmittel rein translatorisch in horizontaler Richtung und/oder rein translatorisch in vertikaler Richtung verstellbar sein.

Gemäß einer Ausführungsform sind die Verstellmittel mit einer Steuerungseinheit verbunden, die das zumindest eine Schneidwerkzeug abhängig von Parametern, insbesondere dem Gewicht, von zuvor verarbeiteten Lebensmittelproduktriegeln verstellt. Vorzugsweise findet die Verstellung des zumindest einen Schneidwerkzeugs mittels der Verstellmittel vollautomatisch statt. Gleiches gilt für die Mittel, um den Käselaib relativ zu einer Schneidebene des Schneidwerkzeugs zu bewegen. Auch diese Mittel können mit einer Steuerungseinheit verbunden sein, um den Käselaib abhängig von Parametern, insbesondere dem Gewicht, von zuvor verarbeiteten Lebensmittelproduktriegeln zu bewegen. Auch dieses Bewegen, insbesondere Verschieben, des Käselaibs geschieht vorzugsweise vollautomatisch.

Die Aufgabe wird zudem gelöst durch ein Verfahren zum Zuführen von Lebensmittelprodukten zu einer Vorrichtung zum parallelen Aufschneiden der Lebensmittelprodukte auf zumindest einer ersten Spur und einer zweiten Spur,
mit den Schritten:
- Ermitteln eines Gewichts eines ersten aufzuschneidenden Lebensmittelproduktriegels,
- Ermitteln eines Gewichts eines zweiten aufzuschneidenden Lebensmittelproduktriegels,
- Ermitteln eines Gewichtsunterschieds zwischen einer bereits der ersten Spur zugeordneten Menge von Lebensmittelproduktriegeln und einer bereits der zweiten Spur zugeordneten Menge von Lebensmittelproduktriegeln,
- Verteilen des ersten Lebensmittelproduktriegels und des zweiten Lebensmittelproduktriegels auf die erste Spur und die zweite Spur abhängig von den ermittelten Gewichten des ersten und zweiten Lebensmittelproduktriegels und dem ermittelten Gewichtsunterschied zwischen der bereits der ersten Spur zugeordneten Menge von Lebensmittelproduktriegeln und der bereits der zweiten Spur zugeordneten Menge von Lebensmittelproduktriegeln.

Ein grundliegender Gedanke dieses Verfahrens besteht darin, einen Gewichtsunterschied zwischen der bereits der ersten Spur zugeordneten Menge von Lebensmittelproduktriegeln und der bereits der zweiten Spur zugeordneten Menge von Lebensmittelproduktriegeln auszugleichen, indem hierzu gewichtstechnisch passende Lebensmittelproduktriegel den jeweiligen Spuren zugeordnet werden. Vorzugsweise wird das Verfahren vollautomatisch durch eine Vorrichtung durchgeführt.

Gemäß einer Ausführungsform umfasst das Verteilen der Lebensmittelproduktriegel ein Zuordnen des leichteren Lebensmittelproduktriegels zu derjenigen Spur, deren zugeordnete Menge von Lebensmittelproduktriegeln bislang schwerer ist. Alternativ oder zusätzlich kann das Verteilen der Lebensmittelproduktriegel ein Zuordnen des schwereren Lebensmittelproduktriegels zu derjenigen Spur umfassen, deren zugeordnete Menge von Lebensmittelproduktriegeln bislang leichter ist.

Vorzugsweise umfasst das Verteilen der Lebensmittelproduktriegel ein separates Aufnehmen des ersten und zweiten Lebensmittelproduktriegels mittels einer Transfereinheit, insbesondere wie zuvor oder nachstehend beschrieben. Alternativ oder zusätzlich kann das Verteilen der Lebensmittelproduktriegel ein separates Ablegen des ersten und zweiten Lebensmittelproduktriegels mittels der Transfereinheit umfassen.

Gemäß einer vorteilhaften Ausführungsform wird vor dem Aufnehmen und/oder Ablegen der Lebensmittelproduktriegel ein Abstand zwischen einem ersten Ablageflächenbereich für den ersten Lebensmittelproduktriegel und einem zweiten Ablageflächenbereich für den zweiten Lebensmittelproduktriegel vergrößert. Der Abstand berechnet sich dabei zwischen einem vordefinierten Punkt auf dem ersten Ablageflächenbereich und einem vordefinierten Punkt auf dem zweiten Ablageflächenbereich. Vorzugsweise wird der Abstand zwischen dem ersten Ablageflächenbereich für den ersten Lebensmittelproduktriegel und dem zweiten Ablageflächenbereich für den zweiten Lebensmittelproduktriegel vergrößert, indem die Ablageflächenbereiche in einer rein translatorischen Bewegung voneinander entfernt werden. Die Veränderung des Abstandes der Ablageflächenbereiche kann mittels der zuvor oder nachstehend beschriebenen Vorrichtung zum Verändern eines Abstandes zwischen zwei Lebensmittelproduktriegeln durchgeführt werden.

Die Vergrößerung des Abstandes zwischen dem ersten Ablageflächenbereich und dem zweiten Ablageflächenbereich hat den Vorteil, dass die Lebensmittelproduktriegel besser von oben und/oder von der Seite her gegriffen werden können oder besser nebeneinander abgelegt werden können. Optional könnten die Lebensmittelproduktriegel sogar um ihre Längsachse gekippt werden.

Gemäß einer Ausführungsform des Verfahrens wird der Abstand zwischen dem ersten Ablageflächenbereich für den ersten Lebensmittelproduktriegel und dem zweiten Ablageflächenbereich für den zweiten Lebensmittelproduktriegel vergrößert, indem ein Abstand zwischen den Ablageflächenbereichen durch eine, ausschließlich in einer quer zu einer Förderrichtung ausgerichteten Verstellrichtung erfolgende, Relativbewegung der Ablageflächenbereiche verändert wird. Vorzugsweise wird die Relativbewegung der Ablageflächen dadurch erzeugt, dass die Ablageflächen mittels mehrerer unterschiedlicher, auf einer Verstellwelle angeordneter, Spindelantriebe mit sich voneinander unterscheidenden Gewindesteigungen unterschiedlich weit in axialer Richtung verfahren werden.

Vorzugsweise werden Produktparameter, Chargen- und Rezepteinstellungen in einer Steuerungseinrichtung, z.B. der Steuerungseinheit der Vorrichtung, eingespeichert. Der Abstand zwischen den Ablageflächenbereichen kann dann abhängig von einer oder mehrerer dieser gespeicherten Daten eingestellt werden. Die zu wählenden Abstände können in einem Speicher abgelegt und, vorzugsweise automatisch, abrufbar sein.

Gemäß einer Ausführungsform wird abhängig von einem Gewichtsunterschied zwischen einem ersten Lebensmittelproduktriegel und einem zweiten Lebensmittelproduktriegel und/oder abhängig von einem Gewichtsunterschied zwischen der bereits der ersten Spur zugeordneten Menge von Lebensmittelproduktriegeln und der bereits der zweiten Spur zugeordneten Menge von Lebensmittelproduktriegeln eine Veränderung an einer Produktlaib-Schneideinheit, z.B. einem Käseteiler, vorgenommen. Hierdurch kann eine Gewichtsverteilung anschließend erzeugter, d.h. geschnittener, Lebensmittelproduktriegel angepasst werden. In anderen Worten kann durch die Veränderung an der Produktlaib-Schneideinheit eine veränderte Schneidebene definiert werden, um einen der Lebensmittelproduktriegel absichtlich schwerer und einen anderen Lebensmittelproduktriegel absichtlich leichter zu machen.

Vorteilhafterweise kann die Veränderung an der Produktlaib-Schneideinheit ein Verstellen eines Schneidwerkzeugs und/oder ein Bewegen eines Produktlaibs relativ zu der Schneidebene des Schneidwerkzeugs umfassen. Das Verstellen des Schneidwerkzeugs und/oder das Bewegen eines Produktlaibs relativ zu der Schneidebene werden/wird vorzugsweise automatisch durchgeführt, beispielsweise mit dem zuvor oder nachstehend beschriebenen Käseteiler.

Nachfolgend wird die Erfindung anhand rein beispielhafter Ausführungsformen unter Bezugnahme auf die beigefügten Zeichnungen beschrieben. Es zeigen:
- Fig. 1: eine konzeptionelle Darstellung einer Draufsicht auf eine Vorrichtung zum Verändern eines Abstandes zwischen zwei Lebensmittelproduktriegeln gemäß einer ersten Ausführungsform in einem zusammengefahrenen Zustand;
- Fig. 2: eine Draufsicht der Vorrichtung von Fig. 1 in einem auseinandergefahrenen Zustand;
- Fig. 3: eine Draufsicht der Vorrichtung von Fig. 1 in einem auseinandergefahrenen Zustand, wobei ein Lebensmittelproduktriegel von seinem Ablageflächenbereich abgehoben ist;
- Fig. 4: eine Draufsicht auf eine zweite, der ersten Vorrichtung nachgeschalteten, Vorrichtung zum Verändern eines Abstandes zwischen zwei Lebensmittelproduktriegeln;
- Fig. 5: eine Draufsicht auf die zweite Vorrichtung zum Verändern eines Abstandes zwischen zwei Lebensmittelproduktriegeln von Fig. 4 in voll bestücktem Zustand;
- Fig. 6: eine Draufsicht auf die zweite Vorrichtung zum Verändern eines Abstandes zwischen zwei Lebensmittelproduktriegeln von Fig. 4 in einem zusammengefahrenen Zustand;
- Fig. 7: eine Seitenansicht einer Vorrichtung zum Verändern eines Abstandes zwischen zwei Lebensmittelproduktriegeln gemäß einer zweiten Ausführungsform in einem zusammengefahrenen Zustand;
- Fig. 8: eine Seitenansicht der Vorrichtung zum Verändern eines Abstandes zwischen zwei Lebensmittelproduktriegeln von Fig. 7 in einem auseinandergefahrenen Zustand;
- Fig. 9: eine detaillierte Darstellung einer Draufsicht auf eine Vorrichtung zum Verändern eines Abstandes zwischen zwei Lebensmittelproduktriegeln mit vier Ablageflächenbereichen in einem zusammengefahrenen Zustand;
- Fig. 10: die Vorrichtung von Fig. 9 ohne Förderelemente;
- Fig. 11: eine Detailansicht einer Kopplungsstelle zwischen einer Linearführung und einer Trägereinheit der Vorrichtung von Fig. 9;
- Fig. 12: eine Stirnansicht der Kopplungsstelle von Fig. 11;
- Fig. 13: eine Seitenansicht der Vorrichtung von Fig. 9;
- Fig. 14: eine konzeptionelle Darstellung einer Draufsicht auf einen Käseteiler;
- Fig. 15: eine konzeptionelle Darstellung einer Draufsicht auf ein System, umfassend den Käseteiler von Fig. 14 und die Vorrichtung zum Verän- dern eines Abstandes zwischen zwei Lebensmittelproduktriegeln von Fig. 1;
- Fig.16: eine detaillierte Darstellung einer Draufsicht auf eine Vorrichtung zum Verändern eines Abstandes zwischen zwei Lebensmittelproduktriegeln mit vier Ablageflächenbereichen gemäß einer zweiten Ausführungsform in einem zusammengefahrenen Zustand;
- Fig.17: die Vorrichtung von Fig. 16 ohne Förderelemente;
- Fig.18: eine Schnittansicht der Vorrichtung von Fig. 16 in Förderrichtung;
- Fig. 19: eine Seitenansicht der Vorrichtung von Fig. 16;
- Fig. 20: eine seitliche Schnittansicht der Vorrichtung von Fig. 16 durch eine Antriebswelle der Vorrichtung; und
- Fig. 21: eine seitliche Schnittansicht der Vorrichtung von Fig. 16 durch eine Verstellwelle der Vorrichtung.

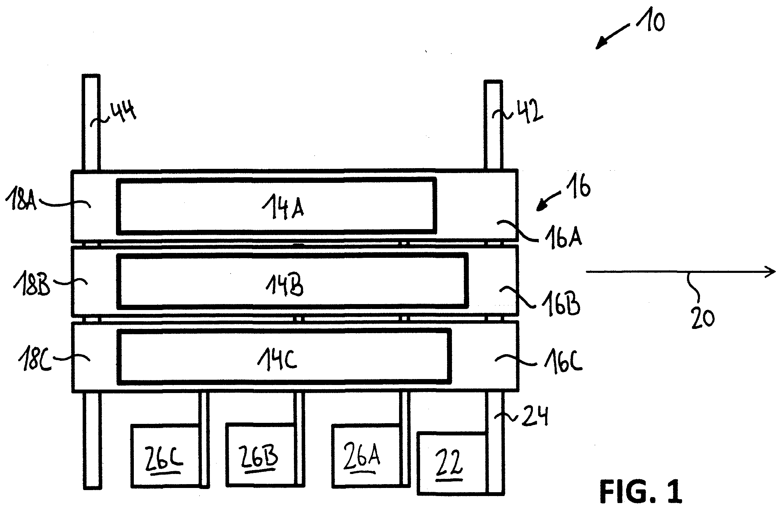

In Fig. 1 ist eine Vorrichtung 10 zum Verändern eines Abstandes zwischen einer Mehrzahl von Lebensmittelproduktriegeln 14A, 14B, 14C gemäß einer ersten Ausführungsform gezeigt. Die Vorrichtung 10 umfasst eine Auflagefläche 16, welche durch drei separate Ablageflächenbereiche 16A, 16B, 16C gebildet ist. Es versteht sich, dass die Auflagefläche 16 auch durch zwei Ablageflächenbereiche oder durch vier oder mehr Ablageflächenbereiche gebildet werden kann, abhängig davon, wie viele Lebensmittelproduktriegel 14 auf der Vorrichtung Platz finden sollen. Jeder der Ablageflächenbereiche 16A, 16B, 16C ist dazu ausgebildet und eingerichtet, um genau einen Lebensmittelproduktriegel 14A, 14B, 14C auf ihnen zu platzieren.

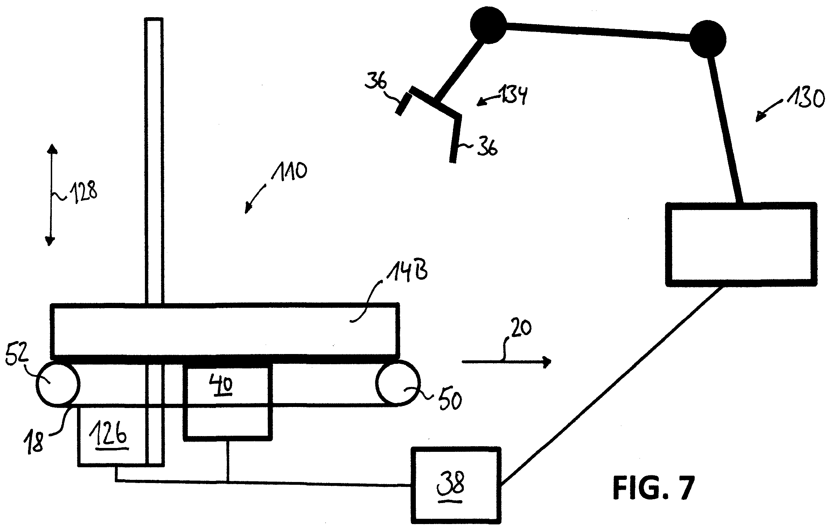

Die drei Ablageflächenbereiche 16A, 16B, 16C sind jeweils durch Endlosförderelemente 18 (siehe Fig. 7) gebildet, um die Lebensmittelproduktriegel 14A, 14B, 14C in Förderrichtung 20 transportieren zu können. Um die Endlosförderelemente 18 aktiv antreiben zu können, sind diese mit einem Antriebsmotor 22 gekoppelt. Der Antriebsmotor 22 ist hierzu antriebswirksam mit einer Antriebswelle 24 gekoppelt, welche wiederum antriebswirksam mit den Endlosförderelementen 18A, 18B und 18C gekoppelt ist.

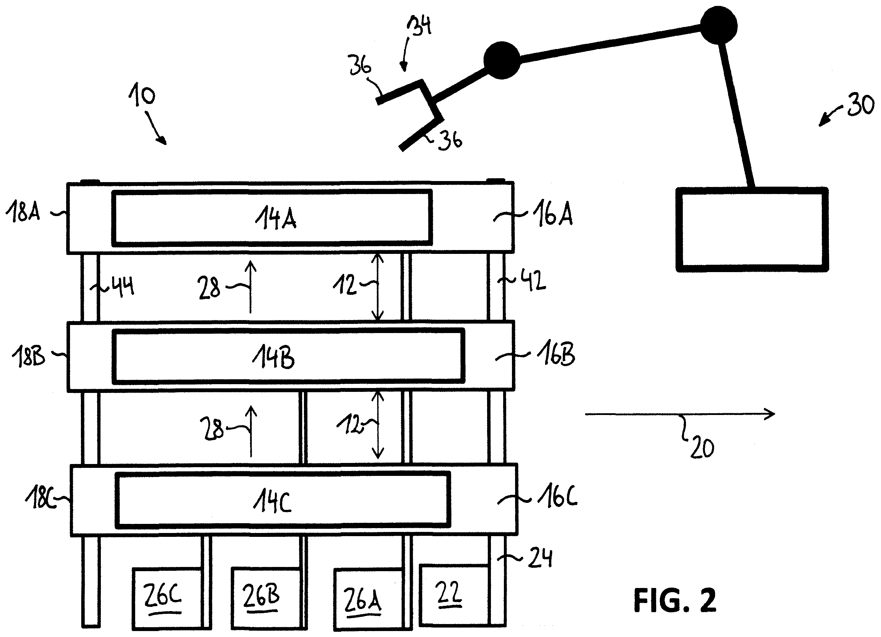

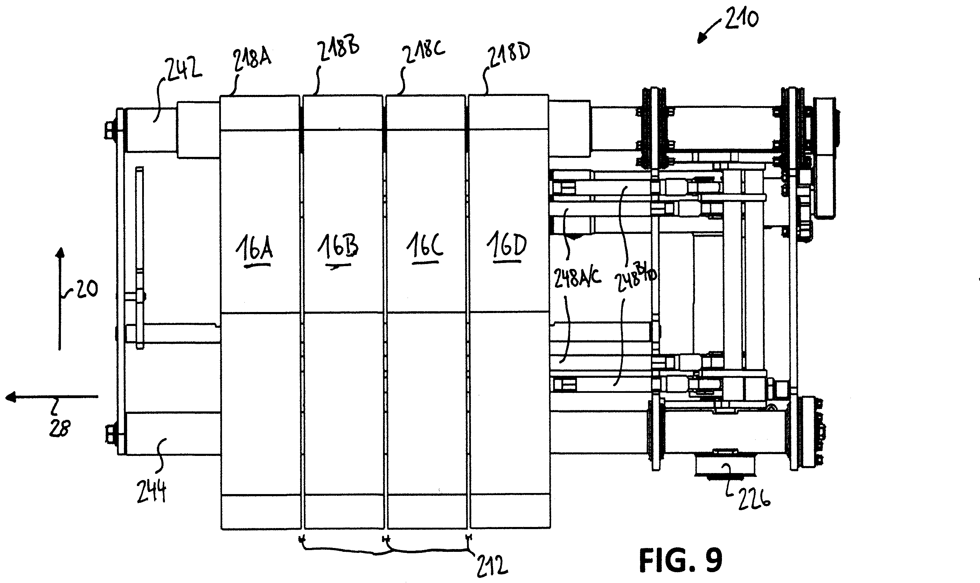

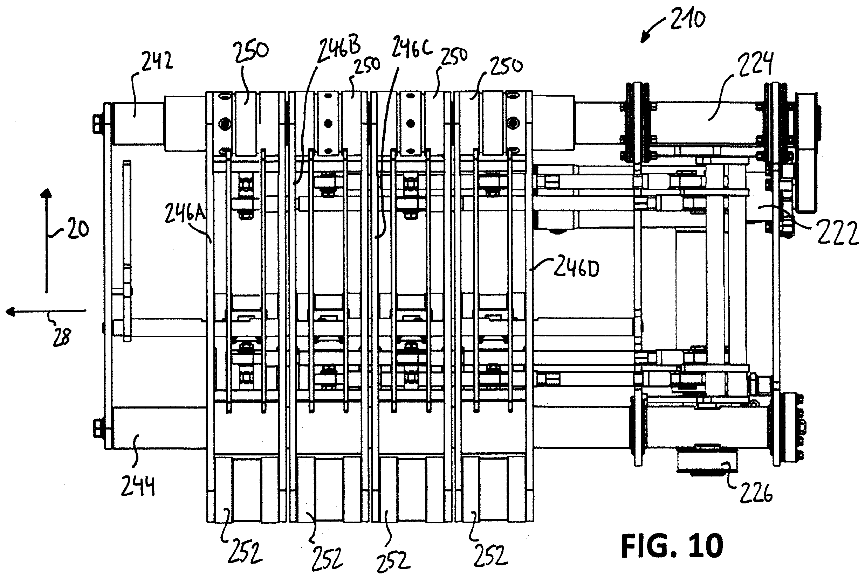

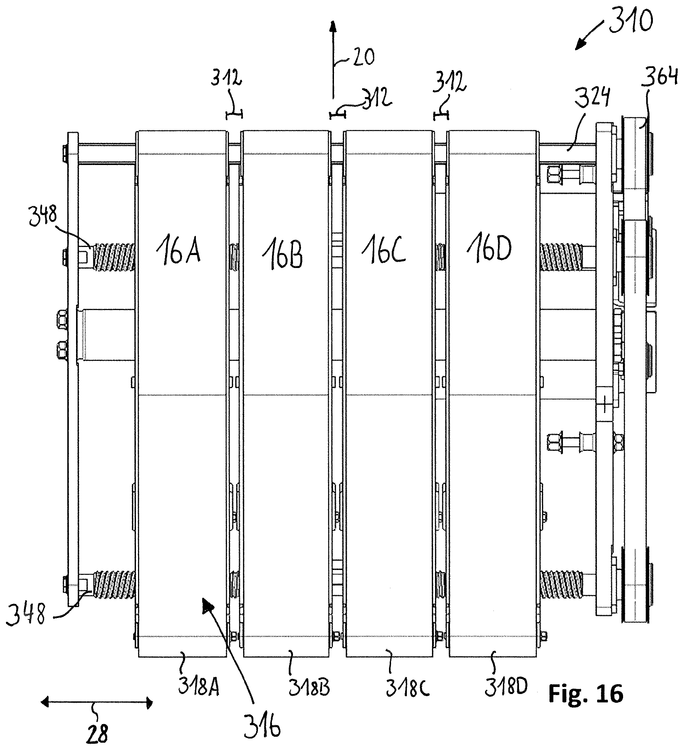

Zudem ist für jedes der Endlosförderelemente 18A, 18B und 18C ein Stellmotor 26A, 26B und 26C vorgesehen, um die Endlosförderelemente 18A, 18B und 18C und deren jeweilige Trägerstruktur in einer Verstellrichtung 28 (siehe Fig. 2) ausschließlich quer zur Förderrichtung 20 zu verstellen. Alternativ dazu können mehrere Endlosförderlemente mit einem einzigen Stellmotor verstellbar sein, wie dies in Bezug auf die Ausführungsform der Figuren 9 und 10 sowie der Ausführungsform der Figuren 16 bis 21 beschrieben ist.

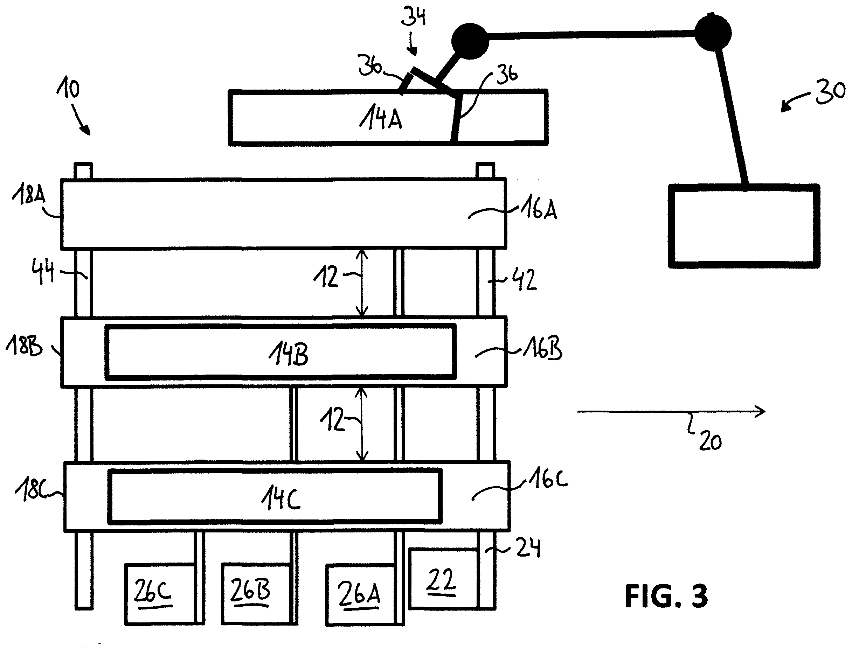

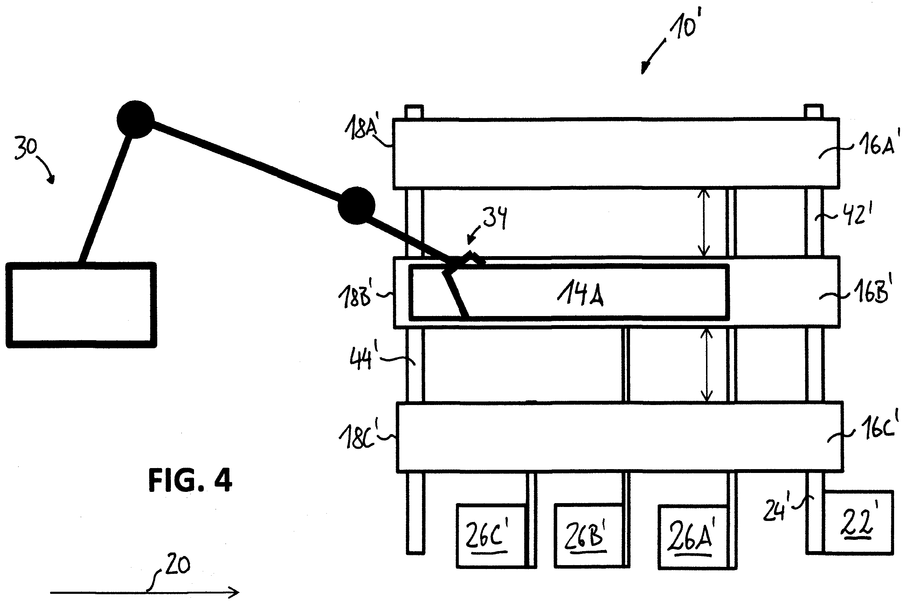

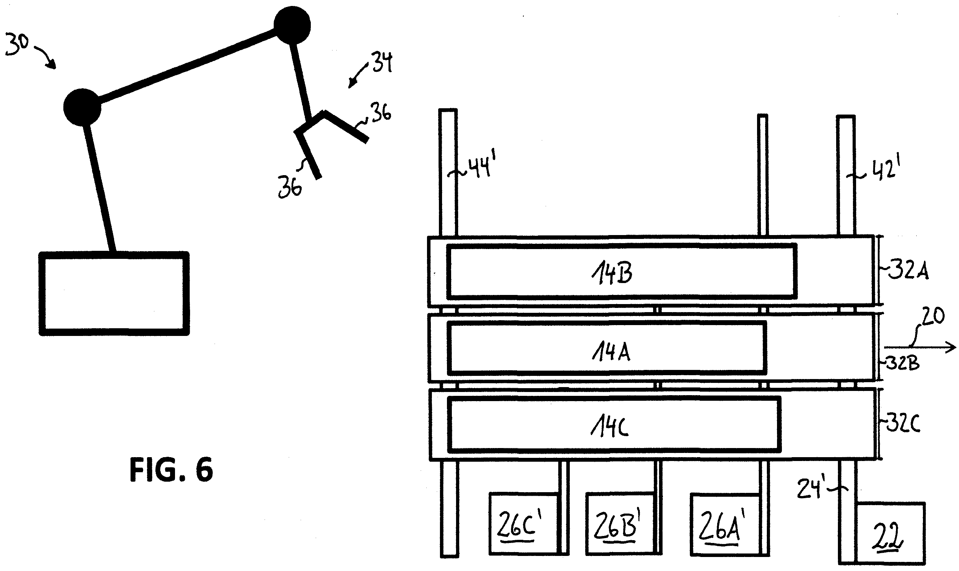

In Fig. 2 ist die Vorrichtung 10 zum Verändern eines Abstandes zwischen den Lebensmittelproduktriegeln 14A, 14B, 14C in auseinandergefahrenem Zustand gezeigt. Hierzu wurde der Ablageflächenbereich 16A und der Ablageflächenbereich 16B entlang der Antriebswelle 24, welche hierzu als Linearführung dient, seitlich verstellt. Der Ablageflächenbereich 16A wird dabei weiter verstellt als der Ablageflächenbereich 16B, um jeweils einen Abstand 12 zwischen den Ablageflächenbereichen 16A bis 16C zu erzeugen. Wenn die Ablageflächenbereiche 16A bis 16C und damit auch die Lebensmittelproduktriegel 14A bis 14C voneinander beabstandet sind, kann eine, als Roboterarm ausgebildete, Transfereinheit 30 die Lebensmittelproduktriegel 14A bis 14C reihenfolgenunabhängig von der Vorrichtung 10 abnehmen (siehe Fig. 3) und auf eine zweite Vorrichtung 10' versetzen (siehe Fig. 4). Hierdurch können die Lebensmittelproduktriegel 14A bis 14C flexibel auf unterschiedliche Spuren 32A bis 32C (siehe Fig. 6) verteilt werden, um letztendlich so angeordnet zu werden, dass die Summen der Massen der auf jeder Spur 32A bis 32C abgelegten Lebensmittelproduktriegel möglichst identisch sind. In anderen Worten wird angestrebt, dass alle auf Ablageflächenbereich 16A' abgelegten Lebensmittelproduktriegel 14 die gleiche Gesamtmasse aufweisen wie alle auf Ablageflächenbereich 16B' abgelegten Lebensmittelproduktriegel 14 und alle auf Ablageflächenbereich 16B' abgelegten Lebensmittelproduktriegel 14 die gleiche Gesamtmasse aufweisen, wie die auf Ablageflächenbereich 16C' abgelegten Lebensmittelproduktriegel 14.

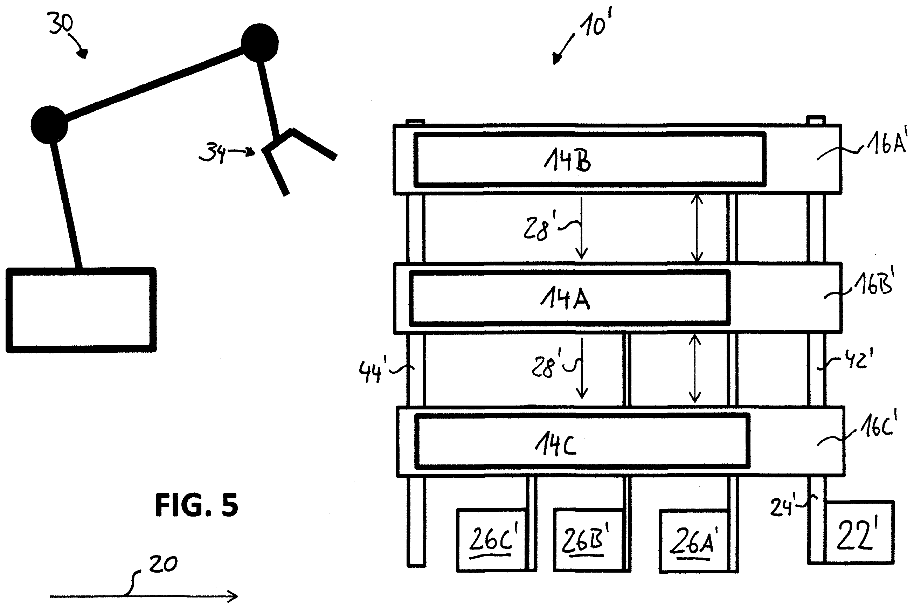

Wenn alle Ablageflächenbereiche 16A'-16C' mit den Lebensmittelproduktriegeln 14A-14C bestückt sind (siehe Fig. 5) kann die zweite Vorrichtung 10' in Verstellrichtung 28' zusammengefahren werden (siehe Fig. 6), d.h. die einzelnen Ablageflächenbereiche 16A' bis 16C' können auf ihren Mindestabstand zusammengefahren werden, um dann die Lebensmittelproduktriegel 14A bis 14C in Förderrichtung 20 an die Spuren 32A bis 32C eines nicht dargestellten Hochleistungsslicers abgeben zu können.

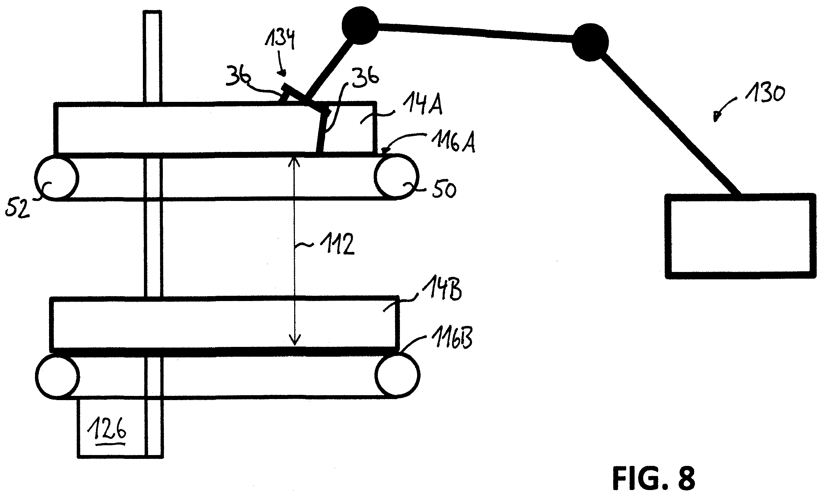

In den Figuren 7 und 8 ist eine zweite Ausführungsform einer Vorrichtung 110 zum Verändern eines Abstandes zwischen einer Mehrzahl von Lebensmittelproduktriegeln 14A, 14B gezeigt. Anstatt seitlich verstellbarer Ablageflächenbereiche sind bei dieser Ausführungsform Ablageflächenbereiche 116A und 116B vorgesehen, die vertikal zueinander verstellbar sind, sodass hierdurch ein Abstand 112 zwischen den Ablageflächenbereichen 116A und 116B erzeugt werden kann. Hierzu weist die Vorrichtung 110 zumindest einen Stellmotor 126 auf, welcher dazu dient, den Ablageflächenbereich 116A relativ zu dem Ablageflächenbereich 116B in vertikaler Richtung zu verstellen. Beispielsweise ist es bei drei Ablageflächenbereichen 116A-116C vorteilhaft, den mittleren der drei Ablageflächenbereiche 116A-116C in Einbaulage nach oben zu verstellen, um auf einfache Weise die Lebensmittelproduktriegel 14 von einer der Seiten her mit einer Transfereinheit 130 greifen zu können. Die Transfereinheit 130, kann -wie auch die Transfereinheit 30 - hierzu ein Greifsystem 134 aufweisen. Das Greifsystem 134 kann zumindest zwei Greifarme 36 umfassen, um die Lebensmittelproduktriegel 14 von oben und/oder von der Seite her greifen zu können.

Die Vorrichtungen 10 und 110, sowie auch alle weiteren beschriebenen Vorrichtungen, weisen vorzugsweise eine Steuerungseinheit 38 auf, welche im Folgenden in Bezug auf die Fig. 7 beschrieben wird. Jede der Ablageflächenbereiche 16A bis 16C ist derart mit einer Waage 40 gekoppelt, dass ein Gewicht der auf den Ablageflächenbereichen 16A bis 16C platzierten Lebensmittelproduktriegel 14A bis 14C messbar ist. Die Massen der jeweiligen Lebensmittelproduktriegel 14A bis 14C werden an die Steuerungseinheit 38 gesendet. Diese ermittelt anhand von Massen von bereits den jeweiligen Spuren 32A bis 32C eines Hochleistungsslicers zugeordneten Lebensmittelproduktriegeln, welcher der Lebensmittelproduktriegel 14A bis 14C welcher Spur 32A bis 32C zugeordnet werden sollte. Dabei ist die Steuerungseinheit 38 vorzugsweise so programmiert, dass ein Massenausgleich von bereits der jeweiligen Spur 32A bis 32C eines Hochleistungsslicers zugeordneten Lebensmittelproduktriegeln stattfindet. Anschließend sendet die Steuerungseinheit ein Signal an die Transfereinheit 130 mit der Information, welcher der Lebensmittelproduktriegel 14A bis 14C welcher Spur 32A bis 32C zugeordnet werden soll. Die Steuerungseinheit kann zudem den Antriebsmotor 22 und/oder die Antriebe der zweiten Vorrichtung 10' steuern.

Die Figuren 9 und 10 zeigen eine detaillierte Darstellung einer Vorrichtung 210 zum Verändern eines Abstandes zwischen einer Mehrzahl von Lebensmittelproduktriegeln 14. Die gezeigte Vorrichtung 210 weist vier Ablageflächenbereiche 16A bis 16D auf und ist somit dafür geeignet, vier Lebensmittelproduktriegel 14 aufzunehmen. Die beschriebenen Merkmale sind aber auch auf Vorrichtungen mit 2, 3 oder mehr als vier Ablageflächenbereiche 16 anwendbar.

Die Vorrichtung 210 weist zwei parallel zueinander und senkrecht zur Förderrichtung 20 angeordnete Linearführungen 242, 244 auf. Entlang dieser Linearführungen 242, 244 sind Tragstrukturen 246A bis 246D (siehe Fig. 10) von Endlosförderelementen 218A bis 218D (siehe Fig. 9) verschiebbar gelagert. Um die Tragstrukturen 246A bis 246D und die daran befestigten Endlosförderelemente 218A bis 218D senkrecht zur Förderrichtung 20 in einer Verstellrichtung 28 zu verstellen, sind Stellantriebe 248A bis 248D vorgesehen. Die Stellantriebe 248A-248D sind im vorliegenden Fall als Spindelantriebe ausgebildet. Die Spindelantriebe weisen Spindeln auf, welche jeweils mit zwei Spindelmuttern in Eingriff stehen. Jede der Spindelmuttern ist mit einer der Tragstrukturen 246A bis 246D verbunden. Damit sich durch eine Drehung der Spindel die Ablageflächenbereiche 16A und 16C unterschiedlich weit verstellen lassen, weist die Spindel zwei unterschiedliche Gewindesteigungen auf. Im vorliegenden Beispiel ist die Gewindesteigung im Bereich der Spindelmutter von Ablageflächenbereich 16A größer als die Gewindesteigung im Bereich der Spindelmutter von Ablageflächenbereich 16C.

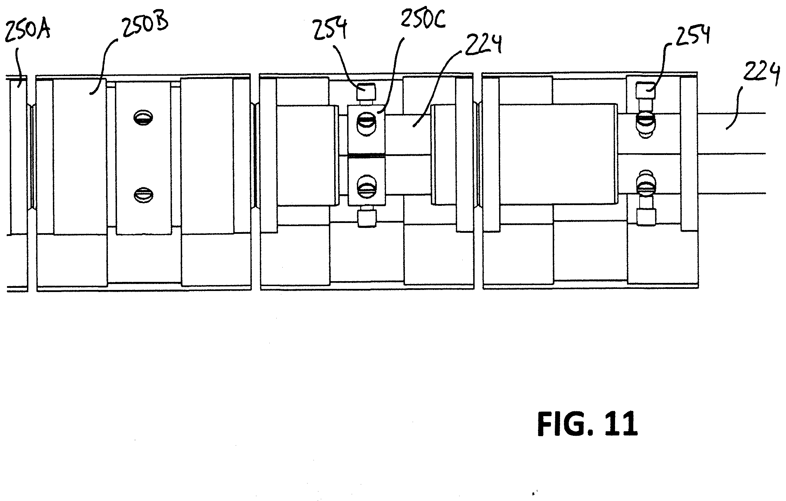

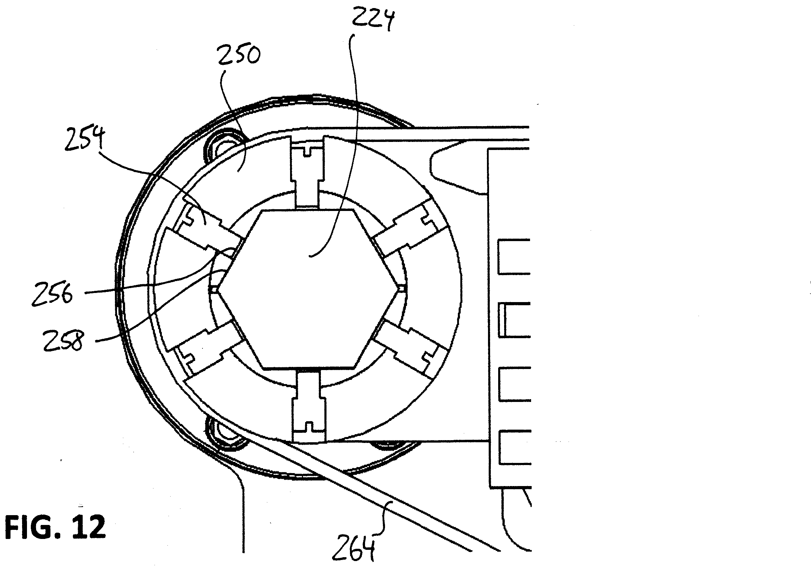

Zudem umfasst die Vorrichtung 210 einen Antriebsmotor 222, welcher eine Antriebswelle 224 antreibt. Diese Antriebswelle 224 bildet die Linearführung 242. Wie in Fig. 10 zu sehen ist, weist jede der Tragstrukturen 246A bis 246D zumindest zwei Umlenkrollen 250, 252 auf, die rotativ an der jeweiligen restlichen Tragstruktur 246A bis 246D gelagert sind. Wie insbesondere in Fig. 11 zu sehen ist, sind die Umlenkrollen 250A bis 250D drehwirksam mit der Antriebswelle 224 gekoppelt. Hierzu ist die Antriebswelle 224 zumindest abschnittsweise unrund, hier sechseckig, ausgebildet. Die Umlenkrollen 250A bis 250D sind, wie in Fig. 12 zu sehen ist, mit sich in radialer Richtung erstreckenden Schrauben 254 an der Antriebswelle 224 drehfest angeordnet. Hierzu weisen die Schrauben 254 an ihrem dem Kopf entgegengesetzten Ende eine ebene Fläche 256 auf, welche mit einer ebenen Umfangsfläche 258 der Antriebswelle 224 flächig in Verbindung gebracht wird. Die Verbindung zwischen den ebenen Flächen 256 der Schrauben 254 und der ebenen Umfangsflächen 258 der Antriebswelle 224 erlaubt es, dass sich die Umlenkrollen 250 zumindest abschnittsweise entlang der Antriebswelle 224 verschieben lassen. Die Kopplungsstelle zwischen der Antriebswelle 224 und den Umlenkrollen 250 ermöglicht es somit einerseits, dass ein Antriebsdrehmoment von der Antriebswelle 224 auf die Umlenkrollen 250 übertragen wird. Andererseits ermöglicht die Kopplungsstelle aber auch, dass sich die Umlenkrollen 250 auf, einen konstanten Querschnitt aufweisenden, Abschnitten der Antriebswelle 224 verschieben lassen.

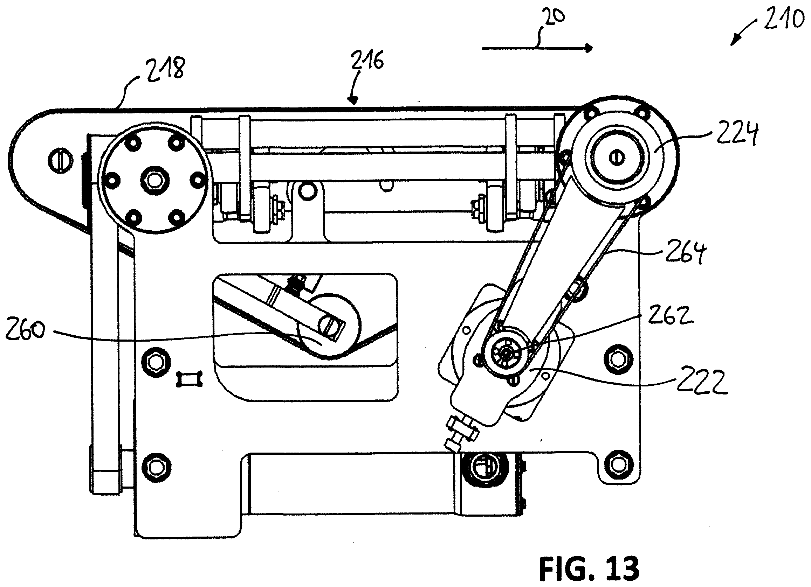

In Fig. 13 ist eine Seitenansicht der Vorrichtung 210 gezeigt. Zum einen ist hier zu sehen, dass für jedes Endlosförderelement 218 eine Spannrolle 260 vorgesehen ist. Die Spannrolle 260 dient dazu, das Endlosförderelement 218 auf Spannung zu halten, damit die Endlosförderelemente 218 in den Ablageflächenbereichen 16A bis 16D eine im Wesentlichen ebene Fläche bilden. Die Spannrolle 260 kann das Endlosförderelement 218 durch ihr Eigengewicht spannen. Alternativ oder zusätzlich kann die Spannrolle 260 durch eine extern aufgebrachte Spannkraft beaufschlagt sein, beispielsweise mittels einer Feder, um das Endlosförderelement 218 zu spannen. Die Spannrollen 260 sind vorzugsweise unterhalb der Ablageflächenbereiche 16A bis 16D angeordnet. Zudem ist es vorteilhaft, wenn auch der Antriebsmotor 222 unterhalb der Ablageflächenbereiche 16A bis 16D angeordnet ist. Eine Verbindung zwischen einer Ausgangswelle 262 des Antriebsmotors 222 und der Antriebswelle 224 kann mittels eines Riemens 264 erfolgen.

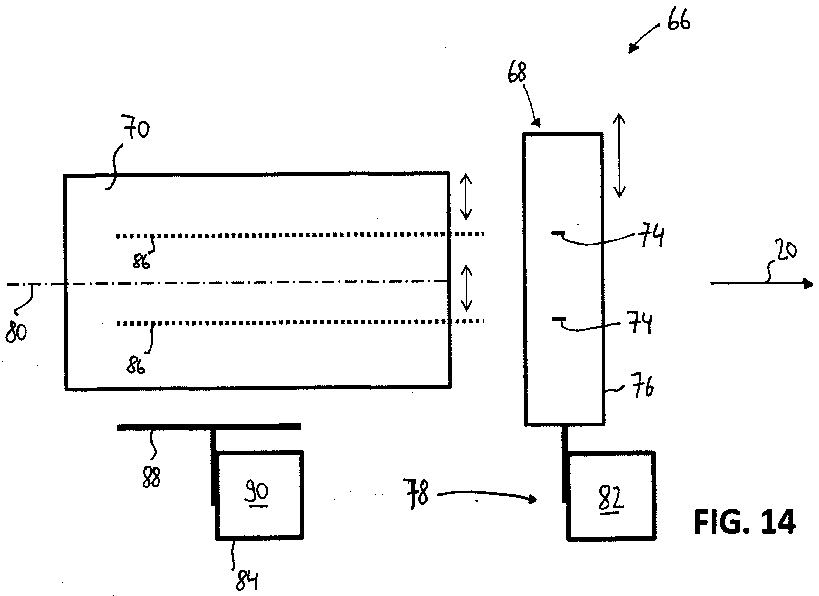

Fig. 14 zeigt einen Käseteiler 66 mit einer Schneideinheit 68, um aus einem Käselaib 70 einzelne Lebensmittelproduktriegel 14A, 14B, 14C zu erzeugen. Die Schneideinheit 68 umfasst zwei Schneidwerkzeuge 74. Es versteht sich aber, dass die Schneideinheit auch ein Schneidwerkzeug oder mehr als zwei Schneidwerkzeuge aufweisen kann. Die Schneidwerkzeuge 74, beispielsweise Schneiddrähte oder Klingen, sind in einen Schneidrahmen 76 eingespannt. Der Käseteiler 66 weist ferner Verstellmittel 78 auf, welche dazu ausgebildet und eingerichtet sind, die Schneidwerkzeuge 74 relativ zu einer Längsachse 80 des Käselaibs 70 zu verstellen. Um die Schneidwerkzeuge 74 aktiv verstellen zu können, weisen die Verstellmittel 78 einen Schneidwerkzeug-Verstellantrieb 82 auf. Alternativ oder zusätzlich können Mittel 84 vorgesehen sein, um den Käselaib 70 relativ zu einer Schneidebene 86 eines der Schneidwerkzeuge 74 zu bewegen. Die Mittel 84 können - wie in Fig. 14 gezeigt - als Schieber 88 ausgebildet sein. Damit das Verstellen vollautomatisch durchgeführt werden kann, ist der Schieber 88 mit einem Verstellmotor 90 gekoppelt.

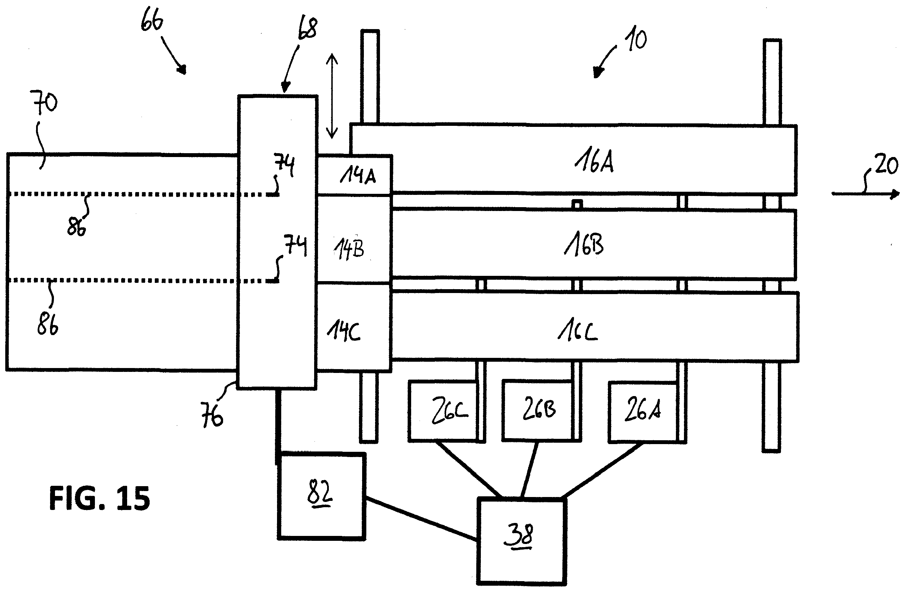

In Fig. 15 ist der Käseteiler 66 in Kombination mit der Vorrichtung 10 gezeigt. Dabei ist die Vorrichtung 10 dem Käseteiler 66 nachgelagert, d.h. die Vorrichtung 10 befindet sich in der Produktionslinie hinter dem Käseteiler 66. Genauer gesagt dient die Vorrichtung 10 als Austaktband für den Käseteiler 66 und schließt somit direkt an den Käseteiler 66 an. Der Käseteiler 66 trennt den Käselaib 70 entlang von sich in Förderrichtung 20 erstreckenden Schneidebenen 86 in mehrere Lebensmittelproduktriegel 14A bis 14C. Jeder dieser Lebensmittelproduktriegel 14A bis 14C wird anschließend auf einem der Ablageflächenbereiche 16A bis 16C platziert. Hierzu können die Ablageflächenbereiche 16A bis 16C vorzugsweise so durch die Stellmotoren 26A bis 26C verstellt werden, dass die Position der Ablageflächenbereiche 16A bis 16C an die Schneidebenen 86 der Schneidwerkzeuge 74 angepasst werden. Beispielsweise zu diesem Zweck kann der Schneidwerkzeug-Verstellantrieb 82 des Käseteilers 66 mit der Steuerungseinheit 38 der Vorrichtung 10 verbunden sein und Informationen über eine Ist-Position der Schneidwerkzeuge 74 an die Steuerungseinheit 38 senden und/oder Informationen zu einer SollPosition der Schneidwerkzeuge 74 von der Steuerungseinheit 38 empfangen.

In den Figuren 16 bis 21 ist eine weitere Variante einer Vorrichtung zum Verändern eines Abstandes zwischen zwei Lebensmittelproduktriegeln gezeigt. Die Vorrichtung 310 weist viele Ähnlichkeiten zu der in Fig. 9 gezeigten Vorrichtung 210 auf, sodass zur Vermeidung von Wiederholungen vorwiegend auf die Unterschiede der beiden Varianten eingegangen wird.

Zur Querverstellung der Auflageflächenbereiche 16A bis 16D sind bei der Vorrichtung 310 zwei sich senkrecht zur Förderrichtung 20 und in Verstellrichtung 28 erstreckende Verstellwellen 396 vorgesehen, welche über den Stellmotor 326 angetrieben werden. Ein Riemen 398 dient zur Übertragung einer Antriebsleistung des Stellmotors 326 auf die Verstellwellen 396.

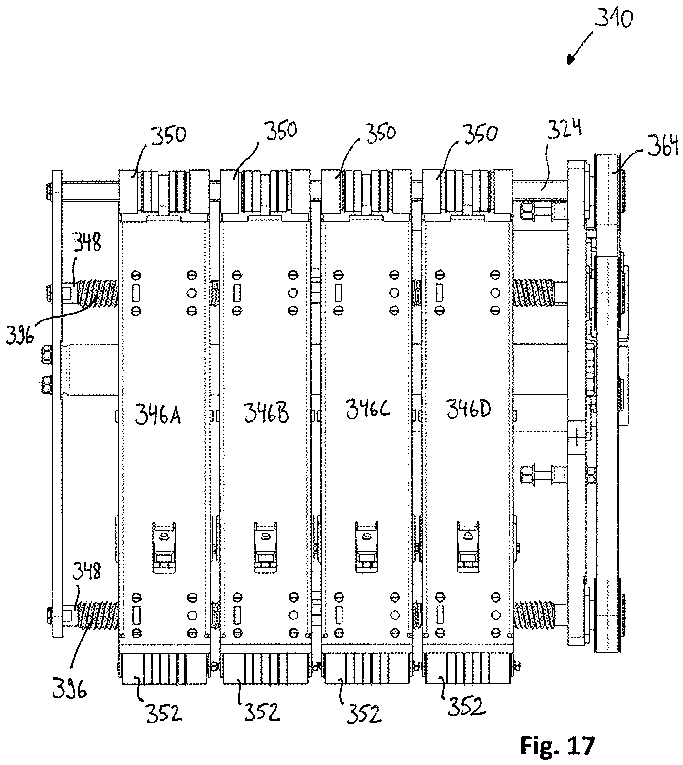

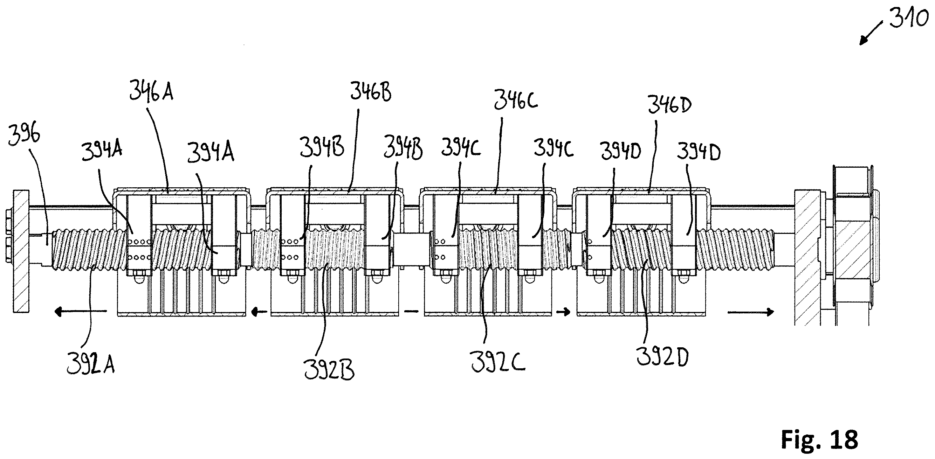

Wie in Fig. 18 zu sehen ist, weisen die Verstellwellen 396 mehrere Spindeln 392A bis 392D auf, welche jeweils mit Spindelmuttern 394A bis 394D in Eingriff stehen. Die Spindelmuttern 394A bis 394D sind wiederum jeweils mit Tragstrukturen 346A bis 346D (siehe Fig. 17) gekoppelt. Die Tragstrukturen 346A bis 346D tragen die, die Auflagefläche 316 bildenden, Endlosförderelemente 318A bis 318D. Wie ebenfalls in Fig. 18 zu sehen ist, weisen die Spindeln 392A bis 392D verschiedene Gewindesteigungen auf. Hierdurch fahren die Spindelmuttern 394A bis 394D bei einem rotativen Antreiben der Verstellwelle 396 unterschiedliche Wege entlang der Verstellwelle 396. Im vorliegenden Beispiel weisen die Gewinde der Spindeln 392A und 392B eine positive Steigung auf, sodass bei Drehung der Verstellwelle 296 die Spindelmuttern 394A und 394B eine Bewegung nach links vollziehen. Dagegen weisen die Gewinde der Spindeln 392C und 392D eine gegensätzliche, negative Steigung auf, sodass bei gleicher Drehung der Verstellwelle 396 die Spindelmuttern 394C und 394D eine entgegengesetzte Bewegung, d.h. nach rechts, vollziehen. Zudem weisen die beiden äußeren Spindeln 392A und 392D eine größere Gewindesteigung auf als die inneren Spindeln 392B und 392C. Hierdurch werden die äußeren Spindelmuttern 394A und 394D bei Verdrehung der Verstellwelle 396 weiter nach außen (siehe Pfeile) in Verstellrichtung 28 verstellt, als die inneren Spindelmuttern 394B und 394C. Durch Verdrehung der Verstellwelle 396 in entgegengesetzter Drehrichtung zurück in eine Ausgangslage bewegen sich die Spindelmuttern 394A bis 394D wieder zurück in die in den Figuren gezeigte Ausgangslage.

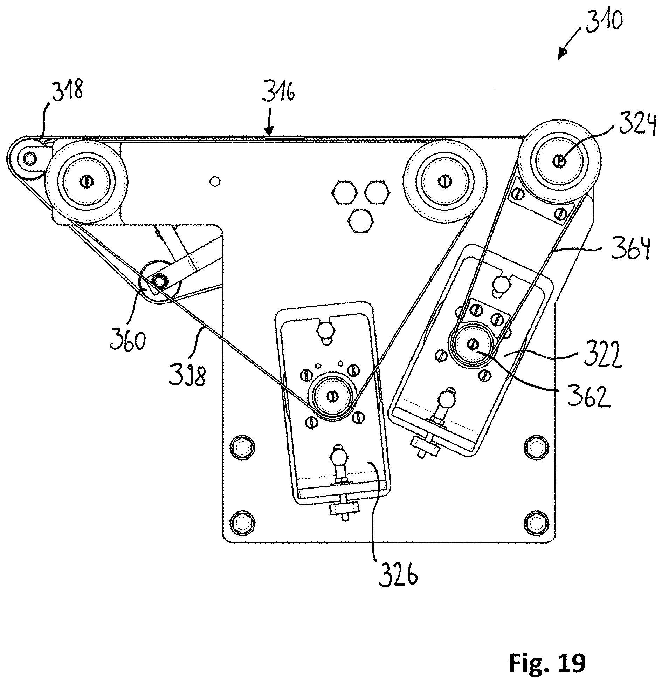

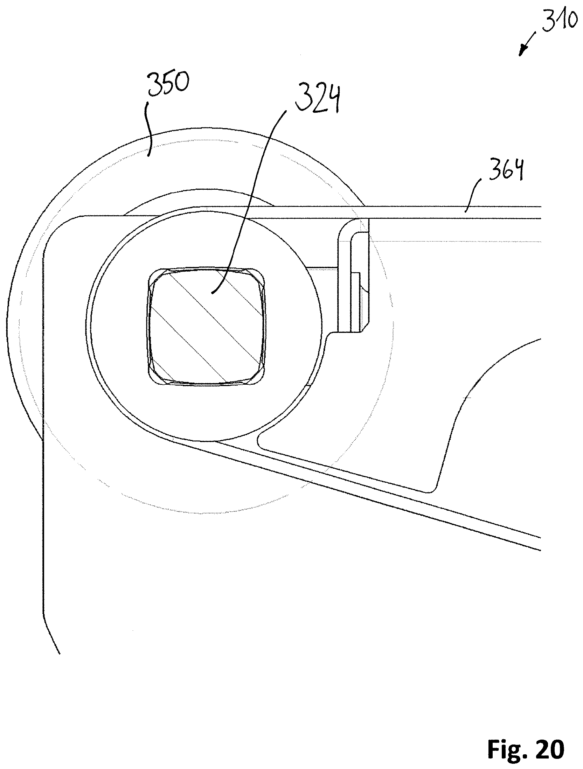

In Fig. 19 ist, neben dem Stellmotor 326, auch der Antriebsmotor 322 zu sehen. Ein Riemen 364 wird verwendet, um das Drehmoment des Antriebsmotors 322 auf die Antriebswelle 324 zu übertragen. Die Antriebswelle 324 ist, wie in Fig. 20 zu sehen ist, als Polygonwelle ausgebildet. Im vorliegenden Fall hat die Polygonwelle einen im Wesentlichen quadratischen Querschnitt. Es sind aber auch Polygonwellen mit anderen Querschnitten denkbar.

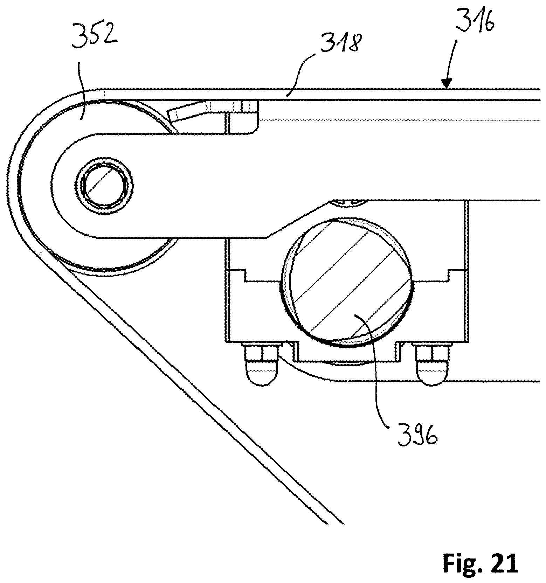

Wie aus Fig. 19 und 21 ersichtlich wird, erstrecken sich die Verstellwellen 396 unterhalb der Auflagefläche 316 der Vorrichtung 310. Dies hat den Vorteil, dass auf der Auflagefläche 316 platzierte Lebensmittelprodukte 14A bis 14D nicht mit eventuell von den Verstellwellen 396 abfallenden Verunreinigungen in Berührung kommen können.

Die zuvor beschriebenen Vorrichtungen 10, 110, 210 und 310 eignen sich besonders gut für die Verwendung als Austaktband für den Käseteiler 66.

### Bezugszeichenliste

| | |
|---|---|
| 10, 110, 210, 310 | Vorrichtung |
| 12, 112, 212, 312 | Abstand |
| 14 | Lebensmittelproduktriegel |
| 16, 116, 216, 316 | Auflagefläche |
| 16A, 16B, 16C | Ablageflächenbereich |
| 18, 218, 318 | Endlosförderelement |
| 20 | Förderrichtung |
| 22, 222, 322 | Antriebsmotor |
| 24, 324 | Antriebswelle |
| 26, 126, 226, 326 | Stellmotor |
| 28 | Verstellrichtung |
| 30, 130 | Transfereinheit |
| 32A, 32B, 32C | Spur |
| 34, 134 | Greifsystem |
| 36 | Greifarm |
| 38 | Steuerungseinheit |
| 40 | Waage |
| 42, 242 | Linearführung |
| 44, 244 | Linearführung |
| 46, 246, 346 | Tragstruktur |
| 248, 348 | Stellantrieb |
| 50, 250 | Umlenkrolle |
| 52, 252 | Umlenkrolle |
| 254 | Schraube |
| 256 | ebene Fläche |
| 258 | Umfangsfläche |
| 260 | Spannrolle |
| 262, 362 | Ausgangswelle |
| 264, 364 | Riemen |
| 66 | Käseteiler |
| 68 | Schneideinheit |
| 70 | Käselaib |
| 74 | Schneidwerkzeug |
| 76 | Schneidrahmen |
| 78 | Verstellmittel |
| 80 | Längsachse |
| 82 | Schneidwerkzeug-Verstellantrieb |
| 84 | Mittel |
| 86 | Schneidebene |
| 88 | Schieber |
| 90 | Verstellmotor |
| 392 | Spindel |
| 394 | Spindelmutter |
| 396 | Verstellwelle |
| 398 | Riemen |

## Patentansprüche

1. Verfahren zum Zuführen von Lebensmittelprodukten zu einer Vorrichtung zum parallelen Aufschneiden der Lebensmittelprodukte auf zumindest einer ersten Spur (32A) und einer zweiten Spur (32B),
mit den Schritten:
Ermitteln eines Gewichts eines ersten aufzuschneidenden Lebensmittelproduktriegels (14A),
Ermitteln eines Gewichts eines zweiten aufzuschneidenden Lebensmittelproduktriegels (14B),
Ermitteln eines Gewichtsunterschieds zwischen einer bereits der ersten Spur zugeordneten Menge von Lebensmittelproduktriegeln und einer bereits der zweiten Spur zugeordneten Menge von Lebensmittelproduktriegeln,
**gekennzeichnet durch** ein
Verteilen des ersten Lebensmittelproduktriegels (14A) und des zweiten Lebensmittelproduktriegels (14B) auf die erste Spur (32A) und die zweite Spur (32B) abhängig von den ermittelten Gewichten des ersten und zweiten Lebensmittelproduktriegels (14A, 14B) und dem ermittelten Gewichtsunterschied zwischen der bereits der ersten Spur (32A) zugeordneten Menge von Lebensmittelproduktriegeln und der bereits der zweiten Spur (32B) zugeordneten Menge von Lebensmittelproduktriegeln.

2. Verfahren nach Anspruch 1,
wobei das Verteilen der Lebensmittelproduktriegel (14A, 14B, 14C) ein Zuordnen des leichteren Lebensmittelproduktriegels zu derjenigen Spur (32A, 32B, 32C) umfasst, deren zugeordnete Menge von Lebensmittelproduktriegeln bislang schwerer ist, und/oder
wobei das Verteilen der Lebensmittelproduktriegel (14A, 14B, 14C) ein Zuordnen des schwereren Lebensmittelproduktriegels zu derjenigen Spur (32A, 32B, 32C) umfasst, deren zugeordnete Menge von Lebensmittelproduktriegeln bislang leichter ist.

3. Verfahren nach zumindest einem der vorherigen Verfahrensansprüche, wobei das Verteilen der Lebensmittelproduktriegel (14A, 14B, 14C) ein separates Aufnehmen des ersten und zweiten Lebensmittelproduktriegels (14A, 14B, 14C) mittels einer Transfereinheit (30), insbesondere eines Roboterarms, und/oder ein separates Ablegen des ersten und zweiten Lebensmittelproduktriegels (14A, 14B, 14C) mittels der Transfereinheit (30) umfasst, insbesondere
wobei vor dem Aufnehmen und/oder Ablegen der Lebensmittelproduktriegel ein Abstand (12) zwischen einem ersten Ablageflächenbereich (16A) für den ersten Lebensmittelproduktriegel (14A) und einem zweiten Ablageflächenbereich (16B) für den zweiten Lebensmittelproduktriegel (14B) vergrößert wird.

4. Verfahren nach Anspruch 3,
wobei der Abstand (12) zwischen dem ersten Ablageflächenbereich (16A) für den ersten Lebensmittelproduktriegel (14A) und dem zweiten Ablageflächenbereich (16B) für den zweiten Lebensmittelproduktriegel (14B) vergrö-ßert wird, indem ein Abstand (12) zwischen den Ablageflächenbereichen (16A, 16B) durch eine, ausschließlich in einer quer zu einer Förderrichtung (20) ausgerichteten Verstellrichtung (28) erfolgende, Relativbewegung der Ablageflächenbereiche (16A, 16B) verändert wird.

5. Verfahren nach zumindest einem der vorherigen Verfahrensansprüche, wobei abhängig von einem Gewichtsunterschied zwischen dem ersten Lebensmittelproduktriegel (14A) und dem zweiten Lebensmittelproduktriegel (14B) und/oder abhängig von dem Gewichtsunterschied zwischen der bereits der ersten Spur (32A) zugeordneten Menge von Lebensmittelproduktriegeln und der bereits der zweiten Spur (32B) zugeordneten Menge von Lebensmittelproduktriegeln eine Veränderung an einer Produktlaib-Schneideinheit (66) vorgenommen wird, um eine Gewichtsverteilung anschließend erzeugter Lebensmittelproduktriegel anzupassen.

6. System mit einer Vorrichtung (10; 110; 210; 310) zum Verändern eines Abstandes zwischen zwei Lebensmittelproduktriegeln (14A, 14B, 14C), wobei die Vorrichtung eine Auflagefläche (16; 116; 216; 316), welche sich in einer im Wesentlichen horizontalen Ebene entlang einer Förderrichtung (20) erstreckt, umfasst,
wobei die zumindest eine Auflagefläche (16; 116; 216; 316) zumindest zwei im Wesentlichen parallel zueinander angeordnete Ablageflächenbereiche (16A, 16B, 16C) bereitstellt,
und wobei ein Abstand (12) zwischen den Ablageflächenbereichen (16A, 16B, 16C) durch eine, ausschließlich in einer quer zu der Förderrichtung (20) ausgerichteten Verstellrichtung (28) erfolgende, Relativbewegung der Ablageflächenbereiche (16A, 16B, 16C) veränderbar ist,
**dadurch gekennzeichnet, dass**
das System ferner eine Transfereinheit (30, 130), insbesondere einen Roboterarm, umfasst, dazu eingerichtet um die Lebensmittelproduktriegel (14A, 14B, 14C) einzeln von den Ablageflächenbereichen (16A, 16B, 16C) abzuheben oder um die Lebensmittelproduktriegel (14A, 14B, 14C) einzeln auf den Ablageflächenbereichen (16A', 16B', 16C') abzulegen, und
dass das System eine Waage (40) umfasst,
dass die Waage (40) mit einer Steuerungseinheit (38) des Systems gekoppelt ist, und dass das System dazu ausgebildet ist, abhängig vom Gewicht des jeweiligen Lebensmittelproduktriegels (14A, 14B, 14C) diesen einer Spur (32A, 32B, 32C) eines Hochleistungsslicers zuzuordnen, um einen Gewichtsunterschied von zwei auf parallelen Spuren (32A, 32B, 32C) aufzuschneidenden Mengen von Lebensmittelproduktriegeln (14A, 14B, 14C) auszugleichen.

7. System nach Anspruch 6,
wobei die Ablageflächenbereiche (16A, 16B, 16C) durch eine rein translatorische Relativbewegung zueinander verstellbar sind.

8. System nach Anspruch 6 oder 7,
wobei die Vorrichtung (10; 110; 210; 310) zumindest einen Stellmotor (26; 126; 226; 326) umfasst, um die Ablageflächenbereiche (16A, 16B, 16C) in der Verstellrichtung (20) relativ zueinander zu verstellen.

9. System nach zumindest einem der vorherigen Ansprüche,
wobei die Auflagefläche (16; 116; 216; 316) durch zumindest ein Förderelement, insbesondere ein Endlosförderelement (18; 218; 318), gebildet wird, insbesondere
wobei das zumindest eine Förderelement (18; 218; 318) mit zumindest einem Antriebsmotor (22, 322) gekoppelt ist, um die Lebensmittelproduktriegel (14) in Förderrichtung (20) anzutreiben.

10. System nach zumindest einem der vorherigen Ansprüche,
wobei die zumindest zwei parallel zueinander angeordneten Ablageflächenbereiche (16A, 16B, 16C) durch separate Elemente, insbesondere Förderelemente (18A, 18B, 18C; 218A, 218B, 218C, 218D; 318A, 318B, 318C, 318D), gebildet sind.

11. Käseteiler (66) mit einer Schneideinheit (68), um aus einem Käselaib (70) einzelne Lebensmittelproduktriegel (14A, 14B, 14C) zu erzeugen,
und mit einem System gemäß zumindest einem der Ansprüche 6 bis 10.

## Claims

1. A method for feeding food products to an apparatus for the parallel slicing of the food products on at least a first track (32A) and a second track (32B), comprising the steps:
determining a weight of a first food product bar (14A) to be sliced,
determining a weight of a second food product bar (14B) to be sliced,
determining a weight difference between a quantity of food product bars already assigned to the first track and a quantity of food product bars already assigned to the second track,
**characterized by** a distribution of the first food product bar (14A) and the second food product bar (14B) to the first track (32A) and the second track (32B) depending on the determined weights of the first and second food product bar (14A, 14B) and the determined weight difference between the quantity of food product bars already assigned to the first track (32A) and the quantity of food product bars already assigned to the second track (32B).

2. A method according to claim 1,
wherein the distribution of the food product bars (14A, 14B, 14C) comprises assigning the lighter food product bar to that track (32A, 32B, 32C) whose assigned quantity of food product bars is heavier so far, and/or
wherein the distribution of the food product bars (14A, 14B, 14C) comprises assigning the heavier food product bar to that track (32A, 32B, 32C) whose assigned quantity of food product bars is lighter so far.

3. A method according to at least one of the preceding method claims,
wherein the distribution of the food product bars (14A, 14B, 14C) comprises a separate picking up of the first and second food product bar (14A, 14B, 14C) by means of a transfer unit (30), in particular a robot arm, and/or a separate placing of the first and second food product bar (14A, 14B, 14C) by means of the transfer unit (30), in particular
wherein a distance (12) between a first placement surface region (16A) for the first food product bar (14A) and a second placement surface region (16B) for the second food product bar (14B) is increased before the picking up and/or placing of the food product bars.

4. A method according to claim 3,
wherein the distance (12) between the first placement surface region (16A) for the first food product bar (14A) and the second placement surface region (16B) for the second food product bar (14B) is increased by changing a distance (12) between the placement surface regions (16A, 16B) by a relative movement of the placement surface regions (16A, 16B) that takes place exclusively in an adjustment direction (28) oriented transversely to a conveying direction (20).

5. A method according to at least one of the preceding method claims, wherein, depending on a weight difference between the first food product bar (14A) and the second food product bar (14B) and/or depending on the weight difference between the quantity of food product bars already assigned to the first track (32A) and the quantity of food product bars already assigned to the second track (32B), a change is made to a product loaf cutting unit (66) in order to adjust a weight distribution of subsequently produced food product bars.

6. A system comprising an apparatus (10; 110; 210; 310) for changing a distance between two food product bars (14A, 14B, 14C),
wherein the apparatus comprises a support surface (16; 116; 216; 316) which extends in a substantially horizontal plane along a conveying direction (20),
wherein the at least one support surface (16; 116; 216; 316) provides at least two placement surface regions (16A, 16B, 16C) arranged substantially in parallel with one another,
and wherein a distance (12) between the placement surface regions (16A, 16B, 16C) can be changed by a relative movement of the placement surface regions (16A, 16B, 16C) that takes place exclusively in an adjustment direction (28) oriented transversely to the conveying direction (20),
**characterized in that**
the system further comprises a transfer unit (30, 130), in particular a robot arm, configured to lift the food product bars (14A, 14B, 14C) individually from the placement surface regions (16A, 16B, 16C) or to place the food product bars (14A, 14B, 14C) individually on the placement surface regions (16A', 16B', 16C'), and
**in that** the system comprises a scale (42),
**in that** the scale (40) is coupled to a control unit (38) of the system, and **in that** the system is configured to assign the respective food product bar (14A, 14B, 14C) to a track (32A, 32B, 32C) of a high-performance slicer depending on the weight of the respective food product bar (14A, 14B, 14C) in order to compensate for a weight difference of two quantities of food product bars (14A, 14B, 14C) to be sliced on parallel tracks (32A, 32B, 32C).

7. A system according to claim 6,
wherein the placement surface regions (16A, 16B, 16C) are adjustable relative to one another by a purely translatory rotational movement.

8. A system according to claim 6 or 7,
wherein the apparatus (10; 110; 210; 310) comprises at least one actuating motor (26; 126; 226; 326) to displace the placement surface regions (16A, 16B, 16C) relative to one another in the adjustment direction (20).

9. A system according to at least one of the preceding claims,
wherein the support surface (16; 116; 216; 316) is formed by at least one conveying element, in particular an endless conveying element (18; 218; 318), in particular
wherein the at least one conveying element (18; 218; 318) is coupled to at least one drive motor (22, 322) in order to drive the food product bars (14) in the conveying direction (20).

10. A system according to at least one of the preceding claims,
wherein the at least two placement surface regions (16A, 16B, 16C) arranged in parallel with one another are formed by separate elements, in particular conveying elements (18A, 18B, 18C; 218A, 218B, 218C, 218D; 318A, 318B, 318C, 318D).

11. A cheese divider (66) comprising a cutting unit (68) to produce individual food product bars (14A, 14B, 14C) from a cheese loaf (70),
and a system according to at least one of the 6 to 10.

## Revendications

1. Procédé d'alimentation en produits alimentaires d'un dispositif destiné à trancher parallèlement les produits alimentaires sur au moins une première piste (32A) et une deuxième piste (32B),
comprenant les étapes consistant à :
déterminer un poids d'une première barre de produit alimentaire (14A) à trancher,
déterminer un poids d'une deuxième barre de produit alimentaire (14B) à trancher,
déterminer une différence de poids entre une quantité de barres de produit alimentaire déjà attribuée à la première piste et une quantité de barres de produit alimentaire déjà attribuée à la deuxième piste,
**caractérisé par**
une distribution de la première barre de produit alimentaire (14A) et de la deuxième barre de produit alimentaire (14B) sur la première piste (32A) et sur la deuxième piste (32B) en fonction des poids déterminés des première et deuxième barres de produit alimentaire (14A, 14B) et de la différence de poids déterminée entre la quantité de barres de produit alimentaire déjà attribuée à la première piste (32A) et la quantité de barres de produit alimentaire déjà attribuée à la deuxième piste (32B).

2. Procédé selon la revendication 1,
dans lequel la distribution des barres de produit alimentaire (14A, 14B, 14C) comprend l'attribution de la barre de produit alimentaire plus légère à la piste (32A, 32B, 32C) dont la quantité attribuée de barres de produit alimentaire est jusqu'à présent plus lourde, et/ou
la distribution des barres de produit alimentaire (14A, 14B, 14C) comprend l'attribution de la barre de produit alimentaire plus lourde à la piste (32A, 32B, 32C) dont la quantité attribuée de barres de produit alimentaire est jusqu'à présent plus légère.

3. Procédé selon l'une au moins des revendications précédentes,
dans lequel la distribution des barres de produit alimentaire (14A, 14B, 14C) comprend une prise séparée de la première et de la deuxième barre de produit alimentaire (14A, 14B, 14C) au moyen d'une unité de transfert (30), en particulier au moyen d'un bras de robot, et/ou une dépose séparée de la première et de la deuxième barre de produit alimentaire (14A, 14B, 14C) au moyen de l'unité de transfert (30), en particulier avant la prise et/ou la dépose des barres de produit alimentaire, une distance (12) entre une première zone de surface de dépose (16A) pour la première barre de produit alimentaire (14A) et une deuxième zone de surface de dépose (16B) pour la deuxième barre de produit alimentaire (14B) est augmentée.

4. Procédé selon la revendication 3,
dans lequel la distance (12) entre la première zone de surface de dépose (16A) pour la première barre de produit alimentaire (14A) et la deuxième zone de surface de dépose (16B) pour la deuxième barre de produit alimentaire (14B) est augmentée en modifiant une distance (12) entre les zones de surface de dépose (16A, 16B) par un mouvement relatif des zones de surface de dépose (16A, 16B) exclusivement dans une direction de réglage (28) orientée transversalement à une direction de convoyage (20).

5. Procédé selon l'une au moins des revendications précédentes,
dans lequel, en fonction d'une différence de poids entre la première barre de produit alimentaire (14A) et la deuxième barre de produit alimentaire (14B) et/ou en fonction de la différence de poids entre la quantité de barres de produit alimentaire déjà attribuée à la première piste (32A) et la quantité de barres de produit alimentaire déjà attribuée à la deuxième piste (32B), une modification est apportée à une unité de découpe de meule de produit (66) afin d'ajuster une distribution de poids de barres de produit alimentaire produites ensuite.

6. Système comprenant un dispositif (10 ; 110 ; 210 ; 310) pour modifier une distance entre deux barres de produit alimentaire (14A, 14B, 14C), le dispositif comprenant une surface de support (16 ; 116 ; 216 ; 316) qui s'étend dans un plan sensiblement horizontal le long d'une direction de convoyage (20),
dans lequel
ladite au moins une surface de support (16 ; 116 ; 216 ; 316) comprend au moins deux zones de surface de dépose (16A, 16B, 16C) disposées sensiblement parallèlement l'une à l'autre,
et une distance (12) entre les zones de surface de dépose (16A, 16B, 16C) peut être modifiée par un mouvement relatif des zones de surface de dépose (16A, 16B, 16C) se produisant exclusivement dans une direction de réglage (28) orientée transversalement à la direction de convoyage (20), **caractérisé en ce que**
le système comprend en outre une unité de transfert (30, 130), en particulier un bras de robot, concu(e) pour soulever les barres de produit alimentaire (14A, 14B, 14C) individuellement des zones de surface de dépose (16A, 16B, 16C) ou pour déposer les barres de produit alimentaire (14A, 14B, 14C) individuellement sur les zones de surface de dépose (16A', 16B', 16C), et
**en ce que** le système comprend une balance (40),
**en ce que** la balance (40) est couplée à une unité de commande (38) du système, et
**en ce que** le système est conçu pour, en fonction du poids de la barre de produit alimentaire (14A, 14B, 14C) respective, attribuer celle-ci à une piste (32A, 32B, 32C) d'une trancheuse à haute performance, afin de compenser une différence de poids entre deux quantités de barres de produit alimentaire (14A, 14B, 14C) à trancher sur des pistes parallèles (32A, 32B, 32C).

7. Système selon la revendication 6,
dans lequel les zones de surface de dépose (16A, 16B, 16C) sont réglables l'une par rapport à l'autre par un mouvement relatif de pure translation.

8. Système selon la revendication 6 ou 7,
dans lequel le dispositif (10 ; 110 ; 210 ; 310) comprend au moins un servomoteur (26 ; 126 ; 226 ; 326) pour déplacer les zones de surface de dépose (16A, 16B, 16C) l'une par rapport à l'autre dans la direction de réglage (20).

9. Système selon l'une au moins des revendications précédentes,
dans lequel la surface de dépose (16 ; 116 ; 216 ; 316) est formée par au moins un élément de convoyage, en particulier par un élément de convoyage sans fin (18 ; 218 ; 318), en particulier ledit au moins un élément de convoyage (18 ; 218 ; 318) est couplé à au moins un moteur d'entraînement (22, 322) pour entraîner les barres de produit alimentaire (14) dans la direction de convoyage (20).

10. Système selon l'une au moins des revendications précédentes,
dans lequel lesdites au moins deux zones de surface de dépose (16A, 16B, 16C) disposées parallèlement l'une à l'autre sont formées par des éléments séparés, en particulier par des éléments de convoyage (18A, 18B, 18C ; 218A, 218B, 218C, 218D ; 318A, 318B, 318C, 318D).

11. Diviseur de fromage (66) comprenant une unité de découpe (68) pour produire des barres individuelles de produit alimentaire (14A, 14B, 14C) à partir d'une meule de fromage (70), et comprenant un système selon l'une au moins des revendications 6 à 10.
